(19) Europäisches Patentamt
European Patent Office
Office européen des brevets

(11) EP 1 911 777 A1

(12) EUROPEAN PATENT APPLICATION
published in accordance with Art. 153(4) EPC

(43) Date of publication:
**16.04.2008 Bulletin 2008/16**

(21) Application number: **06782160.3**

(22) Date of filing: **02.08.2006**

(51) Int Cl.:
***C08F 220/28*** *(2006.01)* ***C08F 8/48*** *(2006.01)*
***C08F 212/06*** *(2006.01)*

(86) International application number:
**PCT/JP2006/315291**

(87) International publication number:
**WO 2007/015512 (08.02.2007 Gazette 2007/06)**

(84) Designated Contracting States:
**CZ PL**

(30) Priority: **04.08.2005 JP 2005227075**

(71) Applicant: **Nippon Shokubai Co., Ltd.**
**Chuo-ku, Osaka-shi**
**Osaka 541-0043 (JP)**

(72) Inventors:
- **UEDA, Ken-ichi**
**Nara-shi Nara 631-0815 (JP)**
- **IZUMI, Hiroko**
**Tsukuba-shi, Ibaraki 305-0035 (JP)**
- **NAKATA, Yoshitomo**
**Hyogo 663-8152 (JP)**
- **MAEDA, Nobuhiro**
**Kobe-shi,**
**Hyogo 658-0016 (JP)**

(74) Representative: **Müller-Boré & Partner**
**Patentanwälte**
**Grafinger Strasse 2**
**81671 München (DE)**

# (54) LOW BIREFRINGENT COPOLYMER

(57) The low birefringent material of the present invention is, for example, an acrylic copolymer including a lactone ring structure which can provide a positive retardation and a structural unit which can provide a negative retardation, the acrylic copolymer satisfying following conditions that: (A) the copolymer has a glass transition temperature (Tg) of 100°C or higher; (B) a film comprising the copolymer has a total light transmittance of 85% or higher; and (C) a retardation per 100 μm of thickness in an in-plane direction of the film is 10 nm or lower, and a difference between a retardation per 100 μm of thickness in an in-plane direction of the film after the film is drawn by 1.5 times and a retardation per 100 μm of thickness in an in-plane direction of the film before the film is drawn is 20 nm or lower. The low birefringent material of the present invention has excellent transparency and heat resistance, also has other desired properties including mechanical strength and forming processability, has low coloration properties when no nitrogen atom is contained, and particularly has high optical isotropy.



Printed by Jouve, 75001 PARIS (FR)

## Description

FIELD OF THE INVENTION

The present invention relates to low birefringent copolymers, and more particularly, the present invention relates to low birefringent materials which are useful for optical and other applications.

BACKGROUND ART

Methacrylic resins represented by poly(methyl methacrylate) (PMMA) have excellent optical properties; in particular, since they have a high total light transmittance, a low birefringent index, and a low retardation, they have been used as a material having high optical isotropy for various optical applications. However, in recent years, with the improvement of flat displays, such as liquid crystal display devices, plasma display devices, and organic electroluminescence display devices, infrared sensors, optical waveguides, and the like, "low birefringent materials", which have excellent transparency and heat resistance and also have high optical isotropy, have become required as optical materials.

On the other hand, as a thermoplastic resin having transparency and heat resistance, for example, Japanese Patent Laid-open Publication Nos. 2000-230016 and 2000-302815 disclose lactone ring-containing polymers obtained by subjecting a polymer having hydroxy groups and ester groups in the molecular chain to the condensation reaction for the formation of a lactone ring. However, if the content of lactone ring structure is increased in order to improve heat resistance, the lactone ring structure provides a positive retardation, so that a retardation of the resultant polymer becomes high, resulting in the lowering of optical isotropy, which makes it difficult to obtain a low birefringent material which is useful for optical applications.

Thus, in order to adjust the birefringence of a lactone ring-containing polymer, it is a possible solution to blend therewith an acrylonitrile-styrene resin (hereinafter referred to sometimes as "AS resin") having a structural unit which can provide a negative retardation. However, the AS resin is susceptible to yellowing from heat, and has a problem that it causes coloration during a kneading step.

DISCLOSURE OF THE INVENTION

Under the above circumstances, an object to be solved by the present invention is to provide a low birefringent material which has excellent transparency and heat resistance, also has other desired properties including mechanical strength and forming processability, has low coloration properties when no nitrogen atom is contained, and particularly has high optical isotropy.

The present inventors have made various studies and, as a result, they have found that a low birefringent material having high optical isotropy can easily be obtained by copolymerizing in advance an acrylic copolymer having a structural unit which can provide a positive retardation with a structural unit which can provide a negative retardation, instead of blending another resin with a lactone ring-containing polymer, so that it becomes unnecessary to adjust the birefringence of the material by blending, thereby completing the present invention.

Thus, the present invention provides an acrylic copolymer comprising a lactone ring structure which can provide a positive retardation and a structural unit which can provide a negative retardation, the acrylic copolymer satisfying following conditions that:

(A) the copolymer has a glass transition temperature (Tg) of 100°C or higher;
(B) a film comprising the copolymer has a total light transmittance of 85% or higher;
(C) a retardation per 100 μm of thickness in an in-plane direction of the film is 10 nm or lower, and a difference between a retardation per 100 μm of thickness in an in-plane direction of the film after the film is drawn by 1.5 times and a retardation per 100 μm of thickness in an in-plane direction of the film before the film is drawn is 20 nm or lower (such an acrylic copolymer may hereinafter be referred to as "acrylic copolymer (1)").

In the acrylic copolymer (1) of the present invention, the lactone ring structure may preferably be represented by the following formula (1):

[Chemical Formula 1]

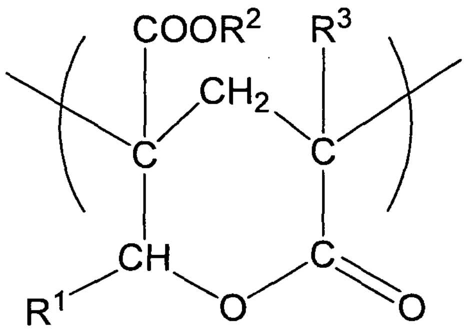

(1)

wherein $R^1$, $R^2$, and $R^3$ each independently represent a hydrogen atom or an organic residue having from 1 to 20 carbon atoms; and the organic residue may contain one or more oxygen atoms. Moreover, the structural unit which can provide a negative retardation may preferably be an aromatic vinyl unit represented by the following formula (2) :

[Chemical Formula 2]

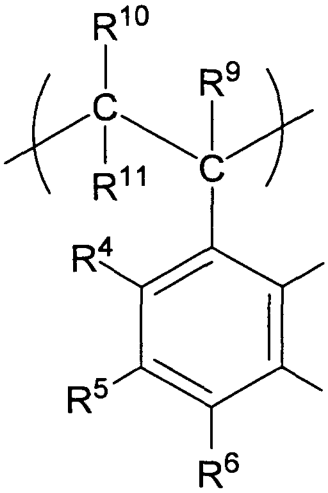

(2)

wherein $R^4$, $R^5$, $R^6$, $R^7$, $R^8$, $R^9$, $R^{10}$, and $R^{11}$ each independently represents a hydrogen atom, a halogen atom, and an organic residue having from 1 to 20 carbon atoms; and the organic residue may contain one or more oxygen atoms.

The acrylic copolymer (1) of the present invention may preferably further comprise a structural unit derived from a (meth)acrylic alkyl ester wherein the alkyl group has from 1 to 7 carbon atoms.

The acrylic copolymer (1) of the present invention may have a yellowing index (YI), at an optical path length of 1 cm, of a 15% chloroform solution of the copolymer after the copolymer is heated at 280°C for 60 minutes under an atmosphere of air, which yellowing index (YI) may preferably be 20 or lower.

The present invention further provides an acrylic copolymer comprising a structural unit which can provide a positive retardation and a structural unit which can provide a negative retardation derived from an aromatic monomer, the acrylic copolymer satisfying following conditions that:

(A) the copolymer has a glass transition temperature (Tg) of 100°C or higher;
(B) a film comprising the copolymer has a total light transmittance of 85% or higher;
(D) retardations per 100 μm of thickness in an in-plane direction of the film and in a thickness direction of the film are 10 nm or lower; and
(E) the copolymer contains no nitrogen atom, and a yellowing index (YI), at an optical path length of 1 cm, of a 15% chloroform solution of the copolymer is lower than 3 (such an acrylic copolymer may hereinafter be referred to as "acrylic copolymer (2)).

The present invention further provides an acrylic copolymer comprising a structural unit which can provide a positive retardation and a structural unit which can provide a negative retardation derived from an aromatic monomer, the acrylic copolymer satisfying following conditions that:

(A) the copolymer has a glass transition temperature (Tg) of 100°C or higher;
(B) a film comprising the copolymer has a total light transmittance of 85% or higher;
(D) retardations per 100 μm of thickness in an in-plane direction of the film and in a thickness direction of the film are 10 nm or lower; and
(F) when the film is bent under an atmosphere of 25°C and 65% RH air to a radius of 1 mm at 180 degrees after being drawn, no crack is formed (such an acrylic copolymer may hereinafter be referred to as "acrylic copolymer (3)").

In the acrylic copolymers (2) and (3) of the present invention, the structural unit which can provide a positive retardation may preferably have a lactone ring structure represented by the following formula (1):

[Chemical Formula 3]

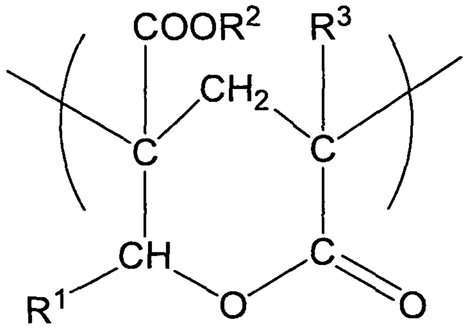

(1)

wherein $R^1$, $R^2$, and $R^3$ each independently represent a hydrogen atom or an organic residue having from 1 to 20 carbon atoms; and the organic residue may contain one or more oxygen atoms.
Moreover, in the acrylic copolymers (1), (2), and (3) of the present invention, the number of foreign particles having an average particle diameter of 20 μm or greater, which are contained in 1 g of the copolymer, may preferably be 50 or smaller.
The present invention further provides a film comprising the acrylic copolymer (1), (2), or (3) as described above.
The acrylic copolymer (1), (2), and (3) may be referred to simply as "acrylic copolymer".
According to the acrylic copolymer of the present invention, since it has a structural unit which can provide a positive retardation and a structural unit which can provide a negative retardation and it satisfies specific conditions, it can provide a low birefringent material which has excellent transparency and heat resistance, also has other desired properties including mechanical strength and forming processability, has low coloration properties when no nitrogen atom is contained, and particularly high optical isotropy.

BEST MODE FOR CARRYING OUT THE INVENTION

<<Low birefringent copolymers>>

The acrylic copolymer (1) of the present invention is an acrylic copolymer comprising a lactone ring structure which can provide a positive retardation and a structural unit which can provide a negative retardation, the acrylic copolymer satisfying following conditions that:

(A) the copolymer has a glass transition temperature (Tg) of 100°C or higher;
(B) a film comprising the copolymer has a total light transmittance of 85% or higher; and
(C) a retardation per 100 μm of thickness in the in-plane direction of the film is 10 nm or lower, and a difference between a retardation per 100 μm of thickness in the in-plane direction of the film after the film is drawn by 1.5 times and a retardation per 100 μm of thickness in the in-plane direction of the film before the film is drawn is 20 nm or lower.

The wording "lactone ring structure which can provide a positive retardation" means, in the case where the copolymer is a single acrylic copolymer, a structural unit making a positive contribution to a retardation in the in-plane

direction of a film made of the copolymer, and containing a lactone ring formed by cyclized condensation of hydroxy groups and ester groups present in the molecular chain at the step of producing the copolymer. Moreover, the wording "structural unit which can provide a negative retardation" means, in the case where the copolymer is a single acrylic copolymer, a structural unit making a negative contribution to a retardation in the in-plane direction of a film made of the copolymer.

The acrylic copolymer (2) of the present invention is an acrylic copolymer comprising a structural unit which can provide a positive retardation and a structural unit which can provide a negative retardation derived from an aromatic monomer, the acrylic copolymer satisfying following conditions that:

(A) the copolymer has a glass transition temperature (Tg) of 100°C or higher;
(B) a film comprising the copolymer has a total light transmittance of 85% or higher;
(D) retardations per 100 μm of thickness in the in-plane direction of the film and in the thickness direction of the film are 10 nm or lower; and
(E) the copolymer contains no nitrogen atom, and a yellowing index (YI), at an optical path length of 1 cm, of a 15% chloroform solution of the copolymer is lower than 3.

The acrylic copolymer (3) of the present invention is an acrylic copolymer comprising a structural unit which can provide a positive retardation and a structural unit which can provide a negative retardation derived from an aromatic monomer, the acrylic copolymer satisfying following conditions that:

(A) the copolymer has a glass transition temperature (Tg) of 100°C or higher;
(B) a film comprising the copolymer has a total light transmittance of 85% or higher;
(D) retardations per 100 μm of thickness in the in-plane direction of the film and in the thickness direction of the film are 10 nm or lower; and
(F) when the film is bent under an atmosphere of 25°C and 65% RH air to a radius of 1 mm at 180 degrees after being drawn, no crack is formed.

The wording "structural unit which can provide a positive retardation" means, in the case where the copolymer is a single acrylic copolymer, a structural unit making a positive contribution to a retardation in the in-plane direction of a film made of the copolymer. Moreover, the wording "structural unit which can provide a negative retardation derived from an aromatic monomer" means, in the case where the copolymer is a single acrylic copolymer, a structural unit making a negative contribution to a retardation in an in-plane direction of a film made of the copolymer, and being derived from an aromatic monomer used for producing the copolymer.

<Structure of acrylic copolymer>

The acrylic copolymer of the present invention has, as a structural unit which can provide a positive retardation, for example, a lactone ring structure, preferably represented by the following formula (1):

[Chemical Formula 4]

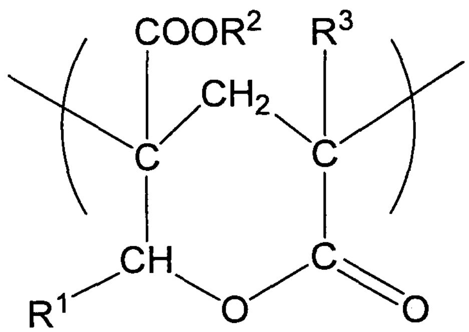

(1)

wherein $R^1$, $R^2$, and $R^3$ each independently represent a hydrogen atom or an organic residue having from 1 to 20 carbon atoms; and the organic residue may contain one or more oxygen atoms; an N-substituted maleimide ring structure, preferably N-substituted maleimide ring structure represented by the following formula (3):

[Chemical Formula 5]

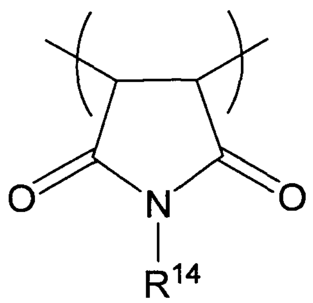

(3)

wherein $R^{14}$ is a hydrogen atom, an alkyl or cycloalkyl group having from 1 to 15 carbon atoms, or an aryl or substituted aryl group having from 6 to 15 carbon atoms; a glutaric acid anhydride structure, preferably a glutaric acid anhydride structure represented by the following formula (4):

[Chemical formula 6]

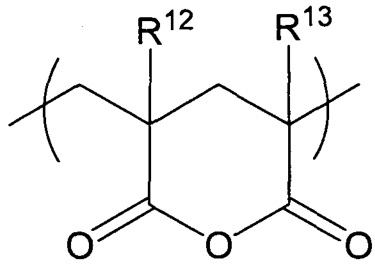

(4)

wherein $R^{12}$ and $R^{13}$ each independently represent a hydrogen atom or a methyl group; or the like. In these structural units which can provide a positive retardation, a lactone ring structure may be preferred, and a lactone ring structure represented by the above formula (1) may particularly be preferred.

The ratio of a structural unit which can provide a positive retardation contained in the structure of the acrylic copolymer may preferably be from 5% to 70% by mass, more preferably from 10% to 60% by mass, still more preferably from 15% to 50% by mass, and particularly preferably from 20% to 40% by mass. When the ratio of a structural unit which can provide a positive retardation is lower than 5% by mass, a retardation in the in-plane direction can easily be balanced out by copolymerization with a structural unit which can provide a negative retardation, but the resultant acrylic copolymer may have lowered heat resistance, solvent resistance, and surface hardness. To the contrary, when the ratio of a structural unit which can provide a positive retardation is higher than 70% by mass, a retardation in the in-plane direction cannot sufficiently be balanced out even by copolymerization with a structural unit which can provide a negative retardation, and the resultant acrylic copolymer may have lowered forming processability.

The acrylic copolymer of the present invention comprises a structural unit which can provide a negative retardation, in addition to a structural unit which can provide a positive retardation. The structural unit which can provide a negative retardation is not particularly limited, but may includes, for example, a structural unit derived from an aromatic monomer, preferably an aromatic vinyl unit represented by the following formula (2):

[Chemical Formula 7]

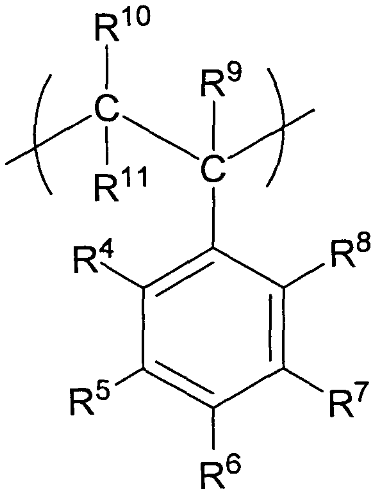

(2)

wherein $R^4$, $R^5$, $R^6$, $R^7$, $R^8$, $R^9$, $R^{10}$, and $R^{11}$ each independently represent a hydrogen atom, a halogen atom or an organic residue having from 1 to 20 carbon atoms; and the organic residue may contain one or more oxygen atoms.

The ratio of a structural unit which can provide a negative retardation contained in the structure of the acrylic copolymer may preferably be from 5% to 50% by mass, more preferably from 5% to 40% by mass, still more preferably from 5% to 30% by mass, and particularly preferably from 5% to 20% by mass. When the ratio of a structural unit which can provide a negative retardation is lower than 5% by mass, a retardation in the in-plane direction cannot sufficiently be balanced out even by copolymerization with a structural unit which can provide a positive retardation. To the contrary, when the ratio of a structural unit which can provide a negative retardation is higher than 50% by mass, a negative retardation may become too large, so that a retardation cannot be balanced out in some cases with a structural unit which can provide a positive retardation.

In the acrylic copolymer of the present invention, structural units other than a structural unit which can provide a positive retardation and a structural unit which can provide a negative retardation (such structural units may hereinafter be referred to as "other structural units") are not particularly limited, but may include, for example, a structural unit (repeating unit) formed by, as described later as a process for producing the copolymer, polymerizing at least one monomer selected from the group consisting of (meth)acrylic acid esters, hydroxy group-containing monomers, unsaturated carboxylic acids, and monomers represented by the following formula (5) :

[Chemical Formula 8]

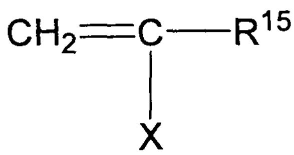

(5)

wherein $R^{15}$ represents a hydrogen atom or a methyl group; X represents a hydrogen atom, an alkyl group having from 1 to 20 carbon atoms, a -OAc group, a -CN group, a -CO-$R^{16}$ group, or -CO-O-$R^{17}$ group; Ac represents an acetyl group; and $R^{16}$ and $R^{17}$ each independently represent a hydrogen atom or an organic residue having from 1 to 20 carbon atoms.

The ratio of other structural units contained in the structure of the acrylic copolymer may, for example, in the case of a structural unit (repeating unit) formed by polymerizing a (meth)acrylic acid ester, preferably from 90% to 50% by mass, more preferably from 85% to 55% by mass, still more preferably from 80% to 60% by mass, and particularly preferably from 75% to 65% by mass, and in the case of a polymer structural unit (repeating structural unit) formed by polymerizing a hydroxy group-containing monomer, preferably from 0% to 30% by mass, more preferably from 0% to 20% by mass, still more preferably from 0% to 10% by mass, and particularly preferably from 0% to 5% by mass.

Moreover, the ratio of other structural units contained in the structure of the acrylic copolymer may, for example, in the case of a structural unit (repeating unit) formed by polymerizing an unsaturated carboxylic acid, preferably from 0% to 30% by mass, more preferably from 0% to 20% by mass, still more preferably from 0% to 10% by mass, and particularly preferably from 0% to 5% by mass. Furthermore, the ratio of other structural units contained in the structure of the acrylic copolymer may, for example, in the case of a structural unit (repeating unit) formed by polymerizing a monomer represented by the above formula (3), preferably from 0% to 30% by mass, more preferably from 0% to 20% by mass, still more preferably from 0% to 10% by mass, and particularly preferably from 0% to 5% by mass.

<Characteristics of acrylic copolymer>

The acrylic copolymer of the present invention has a weight average molecular weight of preferably from 1,000 to 2,000,000, more preferably from 5,000 to 1,000,000, still more preferably from 10,000 to 500,000, and particularly preferably from 50,000 to 500,000. The weight average molecular weight is a value determined by polystyrene calibration using gel permeation chromatography.

The acrylic copolymer of the present invention satisfies specific conditions selected from the following conditions (A) to (F).

Condition (A): The acrylic copolymers (1), (2), and (3) of the present invention have a glass transition temperature (Tg) of 100°C or higher, preferably 110°C or higher, more preferably 120°C or higher, and still more preferably 130°C or higher. The glass transition temperature (Tg) is a value measured by a method in accordance with JIS-K-7121. The glass transition temperature (Tg) is an index of heat resistance, and therefore, the acrylic copolymers of the present invention has high heat resistance. The upper limit of the glass transition temperature (Tg) is not particularly limited, but it may preferably be 200°C, more preferably 180°C, and still more preferably 150°C. When the glass transition temperature (Tg) is lower than 100°C, heat resistance is lowered so that the acrylic copolymers of the present invention cannot be used for applications requiring high heat resistance in some cases.

Condition (B): With respect to the acrylic copolymers (1), (2), and (3) of the present invention, a film comprising the copolymer has a total light transmittance of 85% or higher, preferably 88% or higher, and still more preferably 90% or higher. The total light transmittance is measured by a method in accordance with ASTM-D-1003. The total light transmittance is an index of transparency, and therefore, the acrylic copolymers of the present invention have high transparency. When the total light transmittance is lower than 85%, transparency is lowered so that the acrylic copolymers of the present invention cannot be used for applications requiring high transparency in some cases.

Condition (C): With respect to the acrylic copolymer (1) of the present invention, a film comprising the copolymer has a retardation per 100 μm of thickness in the in-plane direction of the film, which retardation is 10 nm or lower, preferably 9 nm or lower, and more preferably 8 nm or lower, and a film comprising the copolymer has a difference between a retardation per 100 μm of thickness in the in-plane direction of the film after the film is drawn by 1.5 times and a retardation per 100 μm of thickness in the in-plane direction of the film before the film is drawn, which difference is 20 nm or lower, preferably 15 nm or lower, and more preferably 10 nm or lower. The retardation in the in-plane direction is an index of birefringence, and therefore, the acrylic copolymer of the present invention has low birefringence. When a retardation per 100 μm of thickness in the in-plane direction of the film is higher than 10 nm, the anisotropy of a refractive index becomes higher, so that the acrylic copolymer of the present invention cannot be used for applications requiring low birefringent in some cases. In general, when a film is drawn, a retardation in the in-plane direction of the film is increased; therefore, when a retardation per 100 μm of thickness in the in-plane direction of the film after the film is drawn is higher than 20 nm, a low birefringent film having an improved mechanical strength cannot be obtained in some cases.

Condition (D): With respect to the acrylic copolymers (2) and (3) of the present invention, a film comprising the copolymer has retardations per 100 μm of thickness in the in-plane direction of the film and in the thickness direction of the film, which retardations are 10 nm or lower, preferably 9 nm or lower, more preferably 8 nm or lower. The retardations in the in-plane direction and in the thickness direction are an index of the anisotropy of birefringence, and therefore, the acrylic copolymer of the present invention has low anisotropy of birefringence. When retardations per 100 μm of thickness in the in-plane direction and in the thickness direction are higher than 10 nm, the anisotropy of birefringence becomes higher, so that the acrylic copolymers of the present invention cannot be used for applications requiring the isotropy of birefringence in some cases.

Condition (E): The acrylic copolymer (2) of the present invention contains no nitrogen atom and has a yellowing index (YI), at an optical path length of 1 cm, of a 15% chloroform solution of the copolymer, which yellowing index (YI) is lower than 3, preferably lower than 2, more preferably lower than 1.5, and still more preferably lower than 1.

Apart from Condition (E), the acrylic copolymer (1) of the present invention has a yellowing index (YI), at an optical path length of 1 cm, of a 15% chloroform solution of the copolymer after the copolymer is heated under an

atmosphere of air at 280°C for 60 minutes may preferably be 20 or lower, more preferably 18 or lower, and still more preferably 15 or lower.

These yellowing indices (YIs) are an index of the coloration properties, and therefore, the acrylic copolymer of the present invention has low coloration properties. When the yellowing index (YI) is 3 or higher, coloration properties are enhanced by heating at the time of forming, and when the yellowing index (YI) after heating is higher than 20, coloration properties are high, so that the acrylic copolymer of the present invention cannot be used for applications requiring low coloration properties in some cases. Since acrylic copolymers need a high forming temperature, they are susceptible to yellowing at the time of forming, but such yellowing can be suppressed by selecting a structural unit containing no nitrogen atom.

Condition (F): With respect to the acrylic copolymer (3) of the present invention, when a film comprising the copolymer is bent under an atmosphere of 25°C and 65% RH air to a radius of 1 mm at 180 degrees after the film is drawn, no crack is formed. In general, since acrylic resins are fragile, they cannot be put in practical use when they are formed into a film form; however, a practical strength can be imparted thereto by drawing. Moreover, a retardation is generated by drawing, but even if the film is drawn, a low retardation suitable for optical applications can be achieved by copolymerization with a structural unit derived from an aromatic monomer which can provide a negative retardation.

Furthermore, since the acrylic copolymer of the present invention is a low birefringent material and is particularly useful for optical applications, the acrylic copolymer of the present invention may preferably contain no foreign particles or the like. With respect to the acrylic copolymers (2) and (3) of the present invention, the number of foreign particles having an average particle diameter of 20 μm or greater, which are contained in 1 g of copolymer, may preferably be 50 or smaller, more preferably 30 or smaller, and still more preferably 20 or smaller. The number of foreign particles is a value obtained by dissolving 1 g of a sample of the acrylic copolymer in a solvent and counting, as foreign particles, substances having an average particle diameter of 20 μm or greater using a particle counter.

<Production of acrylic copolymer>

The process for producing the acrylic copolymer is not particularly limited, but, first, in the case where an acrylic copolymer having a lactone ring structure as a structural unit which can provide a positive retardation together with a structural unit which can provide a negative retardation in the molecular chain, it can be obtained by carrying out a polymerization step in which an acrylic copolymer (a) having hydroxy groups and ester groups in the molecular chain together with a structural unit which can provide a negative retardation in the molecular chain is obtained and then carrying out a subsequent cyclized condensation step in which the resultant acrylic copolymer (a) is treated by heating to introduce a lactone ring structure which can provide a positive retardation into the acrylic copolymer.

In this case, at the polymerization step, the acrylic copolymer (a) having hydroxy groups and ester groups in the molecular chain together with a structural unit which can provide a negative retardation in the molecular chain can be obtained by carrying out a polymerization reaction of monomer components containing a monomer represented by, for example, the following formula (6):

[Chemical Formula 9]

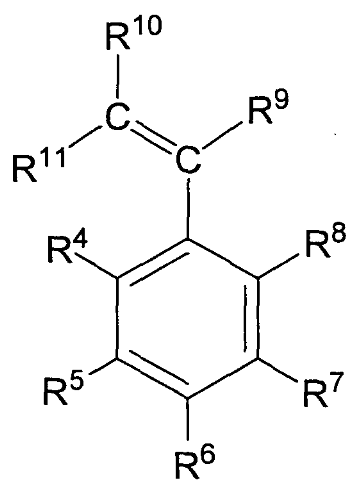

(6)

wherein $R^4$, $R^5$, $R^6$, $R^7$, $R^8$, $R^9$, $R^{10}$, and $R^{11}$ each independently represent a hydrogen atom, a halogen atom, and an organic residue having from 1 to 20 carbon atoms; and the organic residue may contain one or more oxygen atoms;

and a monomer represented by, for example, the following formula (7):

[Chemical Formula 10]

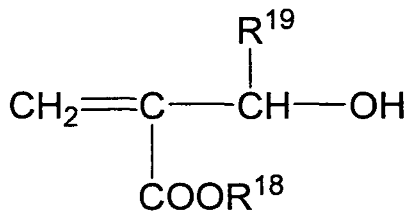

(7)

wherein $R^{18}$ and $R^{19}$ each independently represent a hydrogen atom or an organic residue having from 1 to 20 carbon atoms.

Then, in the case of an acrylic copolymer having an N-substituted maleimide ring structure as a structural unit which can provide a positive retardation together with a structural unit which can provide a negative retardation, it can be obtained by carrying out polymerization using an N-substituted maleimide as a polymerizable monomer, in addition to an aromatic monomer, to introduce an N-substituted maleimide ring structure which can provide a positive retardation in the molecular chain together with a structural unit which can provide a negative retardation in the molecular chain.

In this case, at the polymerization step, an acrylic polymer having an N-substituted maleimide ring structure which can provide a positive retardation in the molecular chain and a structural unit which can provide a negative retardation derived from an aromatic monomer can be obtained by carrying out a polymerization reaction of monomer components containing a monomer represented by, for example,'the above formula (6) and a monomer represented by, for example, the following formula (8):

[Chemical Formula 11]

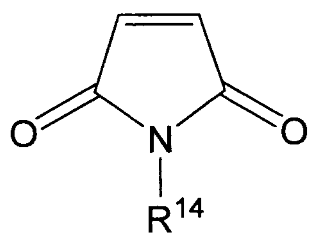

(8)

wherein $R^{14}$ represents a hydrogen atom, an alkyl or cycloalkyl group having from 1 to 15 carbon atoms, or an aryl or substituted aryl group having from 6 to 15 carbon atoms.

Then, in the case of an acrylic copolymer having a glutaric acid anhydride structure as a structural unit which can provide a positive retardation together with a structural unit which can provide a negative retardation in the molecular chain, it can be obtained by carrying out a polymerization step in which an acrylic copolymer (b) having carboxyl groups and ester groups in the molecular chain together with a structural unit which can provide a negative retardation in the molecular chain is obtained and then carrying out a subsequent cyclized condensation step in which the resultant acrylic copolymer (b) is treated by heating to introduce a glutaric acid anhydride structure having a positive retardation into the acrylic copolymer.

In this case, at the polymerization step, the acrylic polymer (b) having carboxyl groups and ester groups in the molecular chain together with a structural unit which can provide a negative retardation in the molecular chain can be obtained by carrying out a polymerization reaction of monomer components containing a monomer represented by, for example, the above formula (6) and (meth)acrylic acid or a (meth)acrylic acid ester.

First, in the case of an acrylic copolymer having a lactone ring structure as a structural unit which can provide a positive retardation together with a structural unit which can provide a negative retardation in the molecular chain, examples of the monomers represented by the above formula (6) may includes styrene, 2-methylstyrene, 3-methylstyrene, 4-methylstyrene, 2,4-dimethylstyrene, 2,5-dimethylstyrene, 2-methyl-4-chlorostyrene, 2,4,6-trimethylstyrene, α-methylstyrene, cis-β-methylstyrene, trans-β-methylstyrene, 4-methyl-α-methylstyrene, 4-fluoro-α-methylstyrene, 4-chloro-α-methylstyrene, 4-bromo-α-methylstyrene, 4-t-butylstyrene, 2-fluorostyrene, 3-fluorostyrene, 4-fluorostyrene, 2,4-difluorostyrene, 2,3,4,5,6-pentafluorostyrene, 2-chlorostyrene, 3-chlorostyrene, 4-chlorostyrene, 2,4-dichlorostyrene, 2,6-dichlorostyrene, octachlorostyrene, 2-bromostyrene, 3-bromostyrene, 4-bromostyrene, 2,4-dibromostyrene, α-bromostyrene, β-bromostyrene, 2-hydroxystyrene, and 4-hydroxystyrene. These monomers may be used alone, or two or more of these monomers may also be used in combination. In these monomers, styrene and α-methylstyrene may particularly be preferred because of their easiness of copolymerization.

The ratio of a monomer represented by the above formula (6) in the monomer components to be fed to the polymerization step may preferably be from 5% to 50% by mass, more preferably from 5% to 40% by mass, still more preferably from 5% to 30% by mass, and particularly preferably from 5% to 20% by mass. When the ratio of a monomer represented by the above formula (4) is lower than 5% by mass, a retardation in the in-plane direction cannot sufficiently be balanced out in some cases even by copolymerization with a structural unit which can provide a positive retardation. To the contrary, when the ratio of a monomer represented by the above formula (4) is higher than 50% by mass, a negative retardation may become too large, so that a retardation cannot be balanced out in some cases with a structural unit which can provide a positive retardation.

Examples of the monomers represented by the above formula (7) may include methyl 2-(hydroxymethyl)acrylate, ethyl 2-(hydroxymethyl)acrylate, isopropyl 2-(hydroxymethyl)acrylate, n-butyl 2-(hydroxymethyl)acrylate, and t-butyl 2-(hydroxymethyl)acrylate. These monomers may be used alone, or two or more of these monomers may also be used in combination. In these monomers, methyl 2-(hydroxymethyl)acrylate and ethyl 2-(hydroxymethyl)-acrylate may be preferred, and methyl 2-(hydroxymethyl)-acrylate may particularly be preferred, because of their high effect of improving heat resistance.

The ratio of a monomer represented by the above formula (7) in the monomer components to be fed to the polymerization step may preferably be from 0% to 40% by mass, more preferably from 0% to 30% by mass, still more preferably from 0% to 20% by mass, and particularly preferably from 0% to 15% by mass. When the ratio of a monomer represented by the above formula (7) is higher than 40% by mass, a gelation may be caused at the polymerization step or at the cyclized condensation step, and the resultant acrylic copolymer may have lowered forming processability.

In the monomer components to be fed to the polymerization step, monomers other than those represented by the above formula (6) and those represented by the above formula (7) may also be blended. Such monomers are not particularly limited, but examples thereof may include (meth)acrylic acid esters, hydroxy group-containing monomers, unsaturated carboxylic acids, and monomers represented by the following formula (5):

[Chemical Formula 12]

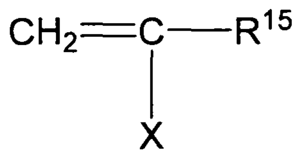

(5)

wherein $R^{15}$ represents a hydrogen atom or a methyl group; X represents a hydrogen atom, an alkyl group having from 1 to 20 carbon atoms, a -OAc group, a -CN group, a $-CO-R^{16}$ group, or a $-CO-O-R^{17}$ group; Ac represents an acetyl group; and $R^{16}$ and $R^{17}$ each independently represent a hydrogen atom or an organic residue having from 1 to 20 carbon atoms. These monomers may be used alone, or two or more of these monomers may also be used in combination.

The (meth)acrylic acid esters are not particularly limited, so long as they are (meth)acrylic acid esters other than the monomers represented by the above formula (7), but examples thereof may includes acrylic acid esters such as methyl acrylate, ethyl acrylate, n-butyl acrylate, isobutyl acrylate, t-butyl acrylate, cyclohexyl acrylate, and benzyl acrylate; and methacrylic acid esters such as methyl methacrylate, ethyl methacrylate, propyl methacrylate, n-butyl methacrylate, isobutyl methacrylate, t-butyl methacrylate, cyclohexyl methacrylate, and benzyl methacrylate. These (meth)acrylic acid esters may be used alone, or two or more of these (meth)acrylic acid esters may also be used in combination. In these (meth)acrylic acid esters, (meth)acrylic acid alkyl esters in which the alkyl group has from 1 to 7 carbon atoms may be preferred, and methyl methacrylate may particularly be preferred because the resultant acrylic copolymer has excellent heat resistance and transparency.

In the case where a (meth)acrylic acid ester other than the monomers represented by the above formula (7) is used, the ratio thereof in the monomer components to be fed to the polymerization step may, in view of allowing the effect of the present invention to be exhibited sufficiently, preferably from 10% to 95% by mass, more preferably from 10% to 90% by mass, still more preferably from 40% to 90% by mass, and particularly preferably from 50% to 90% by mass.

The hydroxy group-containing monomers are not particularly limited, so long as they are hydroxy group-containing monomers other than the monomers represented by the above formula (7), but examples thereof may include

α-hydroxymethylstyrene, α-hydroxyethylstyrene, 2-(hydroxyalkyl)acrylic acid esters such as methyl 2-(hydroxyethyl) acrylate; and 2-(hydroxyalkyl)acrylic acids such as 2-(hydroxyethyl)acrylic acid. These hydroxy group-containing monomers may be used alone, or two or more of these hydroxy group-containing monomers may also be used in combination.

In the case where a hydroxy group-containing monomer other than the monomers represented by the above formula (7) is used, the ratio thereof in the monomer components to be fed to the polymerization step may, in view of allowing the effect of the present invention to be exhibited sufficiently, preferably from 0% to 30% by mass, more preferably from 0% to 20% by mass, still more preferably from 0% to 15% by mass, and particularly preferably from 0% to 10% by mass.

Examples of the unsaturated carboxylic acid may include acrylic acid, methacrylic acid, crotonic acid, α-substituted acrylic acid, and α-substituted methacrylic acid. These unsaturated carboxylic acids may be used alone, or two or more of these unsaturated carboxylic acids may also be used in combination. In these unsaturated carboxylic acids, acrylic acid and methacrylic acid may particularly be preferred because the effect of the present invention can sufficiently be exhibited.

In the case where an unsaturated carboxylic acid is used, the ratio thereof in the monomer components to be fed to the polymerization step may, in view of allowing the effect of the present invention to be exhibited sufficiently, preferably from 0% to 30% by mass, more preferably from 0% to 20% by mass, still more preferably from 0% to 15% by mass, and particularly preferably from 0% to 10% by mass.

Examples of the monomers represented by the above formula (5) may include acrylonitrile, methyl vinyl ketone, ethylene, propylene, and vinyl acetate. These monomers may be used alone, or two or more of these monomers may also be used in combination.

In the case where a monomer represented by the above formula (5) is used, the ratio thereof in the monomer components to be fed to the polymerization step may, in view of allowing the effect of the present invention to be exhibited sufficiently, preferably from 0% to 30% by mass, more preferably from 0% to 20% by mass, still more preferably from 0% to 15% by mass, and particularly preferably from 0% to 10% by mass.

Then, in the case of an acrylic copolymer having an N-substituted maleimide ring structure as a structural unit which can provide a positive retardation together with a structural unit which can provide a negative retardation in the molecular chain, examples of the monomers represented by the above formula (8) may include maleimide, N-methylmaleimide, N-ethylmaleimide, N-propylmaleimide, N-isopropylmaleimide, N-butylmaleimide, N-isobutylmaleimide, N-t-butylmaleimide, N-cyclohexylmaleimide, N-phenylmaleimide, N-chlorophenylmaleimide, N-methylphenylmaleimide, N-naphthylmaleimide, N-laurylmaleimide, 2-hydroxyethylmaleimide, N-hydroxyphenylmaleimide, N-methoxyphenylmaleimide, N-carboxyphenylmaleimide, N-nitrophenylmaleimide, and N-tribromophenylmaleimide. These monomers may be used alone, or two or more of these monomers may also be used in combination. In these monomers, N-phenylmaleimide and N-cyclohexylmaleimide may particularly be preferred.

The ratio of a monomer represented by the above formula (8) in the monomer components to be fed to the polymerization step may preferably be from 5% to 70% by mass, more preferably from 10% to 60% by mass, still more preferably from 15% to 50% by mass, and particularly preferably from 20% to 40% by mass. When the ratio of a monomer represented by the above formula (8) is lower than 5% by mass, a retardation in the in-plane direction cannot sufficiently be balanced out in some cases even by copolymerization with a structural unit which can provide a negative retardation. To the contrary, when the ratio of a monomer represented by the above formula (8) is higher than 70% by mass, a positive retardation may become too large, so that a retardation cannot be balanced out in some cases with a structural unit which can provide a negative retardation.

In the monomer components to be fed to the polymerization step, monomers other than those represented by the above formula (6) and those represented by the above formula (8) may also be blended. Such monomers are not particularly limited, but examples thereof may include (meth)acrylic acid esters, hydroxy group-containing monomers, unsaturated carboxylic acids, and monomers represented by the above formula (5), which are recited above in the case of an acrylic copolymer having a lactone ring structure as a structural unit which can provide a positive retardation together with a structural unit which can provide a negative retardation in the molecular chain. These monomers may be used alone, or two or more of these monomers may also be used in combination. The ratio of each of these monomers in the monomer components to be fed to the polymerization step is the same as described in the case of the acrylic copolymer having a lactone ring structure as a structural unit which can provide a positive retardation together with a structural unit which can provide a negative retardation in the molecular chain.

Then, in the case of an acrylic copolymer having a glutaric acid anhydride structure as a structural unit which can provide a positive retardation together with a structural unit which can provide a negative retardation in the molecular chain, examples of the (meth)acrylic acid ester may include (meth)acrylic acid esters which are recited above in the case of an acrylic copolymer having a lactone ring structure as a structural unit which can provide a positive retardation together with a structural unit which can provide a negative retardation in the molecular chain. These (meth)acrylic acid esters may be used alone, or two or more of these (meth)acrylic acid esters may also be used in combination. In these (meth)acrylic acid esters, (meth)acrylic acid esters in which the alkyl group has from 1 to 5 carbon atoms may be

preferred, and methyl methacrylate may particularly be preferred because the resultant acrylic copolymer has excellent heat resistance and transparency.

The ratio of a (meth)acrylic acid in the monomer components to be fed to the polymerization step may preferably from 0% to 30% by mass, more preferably from 0% to 20% by mass, still more preferably from 0% to 15% by mass, and particularly preferably from 0% to 10% by mass. When the ratio of a (meth)acrylic acid is higher than 30% by mass, a gelation may be caused at the polymerization step and the like.

The ratio of a (meth)acrylic acid ester in the monomer components to be fed to the polymerization step may preferably be from 50% to 95% by mass, more preferably from 55% to 90% by mass, still more preferably from 60% to 90% by mass, and particularly preferably from 65% to 85% by mass. When the ratio of a (meth)acrylic acid ester is lower than 50% by mass, the resultant acrylic copolymer may have a deteriorated optical property. To the contrary, when the ratio of a (meth)acrylic acid ester is higher than 95% by mass, the resultant acrylic copolymer may have lowered heat resistance, and a retardation may become larger. In the monomer components to be fed to the polymerization step, monomers other than (meth)acrylic acid and (meth)acrylic acid esters may also be blended. Such monomers are not particularly limited, but examples thereof may include hydroxy group-containing monomers, unsaturated carboxylic acids, and monomers represented by the above formula (5), which are recited above in the case of an acrylic copolymer having a lactone ring structure as a structural unit which can provide a positive retardation together with a structural unit which can provide a negative retardation in the molecular chain. These monomers may be used alone, or two or more of these monomers may also be used in combination. The ratio of each of these monomers in the monomer components to be fed to the polymerization step is the same as described in the case of an acrylic copolymer having a lactone ring structure as a structural unit which can provide a positive retardation together with a structural unit which can provide a negative retardation in the molecular chain.

The pattern of a polymerization reaction to obtain an acrylic copolymer (a) or (b) having hydroxy groups or carboxyl groups, respectively, and ester groups in the molecular chain together with a structural unit which can provide a negative retardation in the molecular chain, or an acrylic copolymer having an N-substituted maleimide ring structure which can provide a positive retardation together with a structural unit which can provide a negative retardation in the molecular chain, may preferably be the pattern of polymerization using a solvent, particularly preferably solution polymerization.

The polymerization temperature and time may vary depending on, for example, the types and ratios of monomers to be used, but it may be preferred that the polymerization temperature is from 0°C to 150°C and the polymerization time is from 0.5 to 20 hours, and it may be more preferred that the polymerization temperature is from 80°C to 140°C and the polymerization time is from 1 to 10 hours.

In the pattern of polymerization using a solvent, the polymerization solvent is not particularly limited, but examples thereof may include aromatic hydrocarbon type solvents such as toluene, xylene, and ethyl benzene; ketone type solvents such as methyl ethyl ketone and methyl isobutyl ketone; and ether type solvents such as tetrahydrofuran. These solvents may be used alone, or two or more of these solvents may also be used in combination. Moreover, if a solvent has a too high boiling point, a residual volatile content of an acrylic copolymer to be finally obtained may become higher, so that a solvent having a boiling point of from 50°C to 200°C may be preferred.

At the time of a polymerization reaction, a polymerization initiator may be added, if necessary. The polymerization initiator is not particularly limited, but examples thereof may include organic peroxides such as cumene hydroperoxide, diisopropylbenzene hydroperoxide, di-t-butyl peroxide, lauroyl peroxide, benzoyl peroxide, t-butylperoxyisopropyl carbonate, and t-amyl peroxy-2-ethylhexanoate; and azo compounds such as 2,2'-azobis-(isobutyronitrile), 1,1'-azobis (cyclohexanecarbonitrile), 2,2'-azobis(2,4-dimethylvaleronitrile), and dimethyl 2,2'-azobisisobutyrate. These polymerization initiators may be used alone, or two or more of these polymerization initiators may also be used in combination. The amount of the polymerization initiator to be used is not particularly limited, but it may appropriately be set in accordance with, for example, the combination of monomers and the reaction conditions.

When polymerization is carried out, it may be preferred that the concentration of an acrylic copolymer formed in the polymerization reaction mixture is controlled to be 50% by mass or lower for the purpose of suppressing a gelation of the reaction solution. Specifically, when the concentration of an acrylic copolymer formed in the polymerization reaction mixture is higher than 50% by mass, it may preferably be controlled to become 50% by mass or lower by appropriately adding a polymerization solvent to the polymerization reaction mixture. The concentration of an acrylic copolymer formed in the polymerization reaction mixture may more preferably be 45% by mass or lower, still more preferably 40% by mass or lower. When the concentration of an acrylic copolymer formed in the polymerization reaction mixture is too low, productivity becomes lowered; therefore, the concentration of an acrylic copolymer formed in the polymerization reaction mixture may preferably be 10% by mass or higher, more preferably 20% by mass or higher.

The pattern of appropriately adding a polymerization solvent to the polymerization reaction mixture is not particularly limited, but for example, a polymerization solvent may be added continuously or intermittently. By controlling the concentration of an acrylic copolymer formed in the polymerization reaction mixture, a gelation of the reaction solution can be suppressed more sufficiently, particularly even when the ratios of hydroxy groups and ester groups in the molecular

chain are increased for the purpose of improving heat resistance by increasing the ratio of a lactone ring.
The polymerization solvent to be added may be, for example, the same type of solvent as used at the initial feed in the polymerization reaction or may also be a different type of solvent, but the same type of solvent as used at the initial feed in the polymerization reaction may preferably be used. Moreover, the polymerization solvent to be added may be a single solvent consisting of only one type of solvent or may be a mixed solvent consisting of two or more types of solvents.

The polymerization reaction mixture to be obtained at the time of completing the above polymerization step may usually contain a solvent other than the resultant acrylic copolymer, but it is unnecessary to take out the acrylic copolymer in a solid state by completely removing the solvent; it may be preferred to introduce the acrylic copolymer in a state of containing the solvent to the subsequent cyclized condensation step. Moreover, if necessary, after the acrylic copolymer is taken out in a solid state, a solvent suitable for the subsequent cyclized condensation step may be added to the acrylic copolymer.

The acrylic copolymer obtained at the polymerization step is an acrylic copolymer (a) or (b) having hydroxy groups or carboxyl groups, respectively, and ester groups together with a structural unit which can provide a negative retardation in the molecular chain, or an acrylic copolymer having an N-substituted maleimide ring structure which can provide a negative retardation in the molecular chain together with a structural unit which can provide a negative retardation in the molecular chain, and the weight average molecular weight of each of these acrylic polymers may preferably be from 1,000 to 2,000,000, more preferably from 5,000 to 1,000,000, still more preferably from 10,000 to 500,000, and particularly preferably from 50,000 to 500,000. The weight average molecular weight is a value determined by polystyrene calibration using gel permeation chromatography. The acrylic copolymer (a) or (b) obtained at the polymerization step is treated by heating at the subsequent cyclized condensation step to introduce a lactone ring structure or a glutaric acid anhydride structure which can provide a positive retardation to the acrylic copolymer, resulting in a low birefringent copolymer.

The reaction for introducing a lactone ring structure or a glutaric acid anhydride structure in the acrylic copolymer (a) or (b) is a reaction in which the hydroxy groups or the carboxyl groups and the ester groups present in the molecular chain of the acrylic copolymer (a) or (b) undergo cyclized condensation by heating to form the lactone ring structure or the glutaric acid anhydride structure, and the cyclized condensation gives an alcohol as a by-product. The formation of a lactone ring structure or a glutaric acid anhydride structure in the molecular chain of an acrylic copolymer (i.e., in the main backbone of the acrylic copolymer) makes it possible that a retardation in the in-plane direction is balanced out by coexistence with a structural unit which can provide a negative retardation, and, at the same time, the acrylic copolymer is provided with high heat resistance. When the reaction rate of a cyclized condensation reaction for introducing a lactone ring structure or a glutaric acid anhydride structure is insufficient, a retardation in the in-plane direction cannot sufficiently be balanced out in some cases, or heat resistance is not sufficiently improved, or a condensation reaction may occur by heating treatment at the time of forming, so that the resultant alcohol may become present in the formed product in the form of bubbles or silver streaks.

The low birefringent copolymer obtained at the cyclized condensation step may preferably have, as a structural unit which can provide a positive retardation, a lactone ring structure represented by the following formula (1):

[Chemical Formula 13]

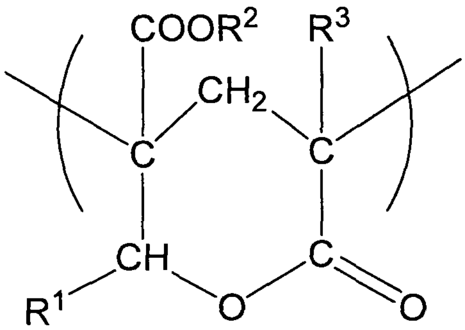

(1)

wherein $R^1$, $R^2$, and $R^3$ each independently represent a hydrogen atom or an organic residue having from 1 to 20 carbon atoms; and the organic residue may contain one or more oxygen atoms; or a glutaric acid anhydride structure represented by the following formula (4):

[Chemical Formula 14]

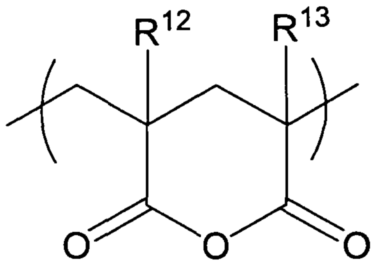

(4)

wherein $R^{12}$ and $R^{13}$ each independently represent a hydrogen atom or a methyl group.

The method of treating the acrylic copolymer (a) or (b) by heating is not particularly limited, but any of the heretofore known methods may be used. For example, a polymerization reaction mixture containing a solvent obtained at the polymerization step may be treated by heating without any further treatment. Alternatively, heating treatment may be carried out in the presence of a solvent, using a ring-closing catalyst, if necessary. Alternatively, heating treatment can also be carried out using a furnace or a reactor, equipped with a vacuum apparatus or a devolatilization apparatus for removing volatile components, an extruder equipped with a devolatilization apparatus, or the like.

When a cyclized condensation reaction is carried out, in addition to the acrylic copolymer (a) or (b), other thermoplastic resins may also be allowed to coexist. Moreover, when a cyclized condensation reaction is carried out, there may be used, if necessary, one or more esterification catalysts or one or more transesterification catalysts, such as p-toluenesulfonic acid, which are usually used as a catalyst for the cyclized condensation reaction, and there may also be used, if necessary, one or more organic carboxylic acids, such as acetic acid, propionic acid, benzoic acid, acrylic acid, and methacrylic acid, as a catalyst. Furthermore, as disclosed in the Japanese Patent Laid-open Publication Nos. 61-254608 and 61-261303, there may also be used, for example, one or more basic compounds, one or more organic carboxylic acid salts, one or more carbonates, and the like.

Alternatively, one or more organophosphorous compounds may also be used as a catalyst for the cyclized condensation reaction. Examples of the organophosphorous compounds which can be used may include alkyl(aryl)-phosphonous acids (provided that these phosphonous acids may take the form of alkyl(aryl)phosphinic acids which are tautomers), such as methylphosphonous acid, ethylphosphonous acid, and phenylphosphonous acid, and monoesters or diesters of these phosphonous acids; dialkyl(aryl)phosphinic acids such as dimethylphosphinic acid, diethylphosphinic acid, diphenylphosphinic acid, phenylmethylphosphinic acid, and phenylethylphosphinic acid, and esters of these phosphinic acids; alkyl(aryl)-phosphonic acids such as methylphosphonic acid, ethylphosphonic acid, trifluoromethylphosphonic acid, and phenylphosphonic acid, and monoesters or diesters of these phosphonic acids; alkyl(aryl) phosphinous acids such as methylphosphinous acid, ethylphosphinous acid, and phenylphosphinous acid, and esters of these phosphinous acids; phosphite monoesters, diesters, or triesters, such as methyl phosphite, ethyl phosphite, phenyl phosphite, dimethyl phosphite, diethyl phosphite, diphenyl phosphite, trimethyl phosphite, triethyl phosphite, and triphenyl phosphite; phosphate monoesters, diesters, or triesters, such as methyl phosphate, ethyl phosphate, 2-ethylhexyl phosphate, isodecyl phosphate, lauryl phosphate, stearyl phosphate, isostearyl phosphate, phenyl phosphate, dimethyl phosphate, diethyl phosphate, di-2-ethylhexyl phosphate, octyl phosphate, diisodecyl phosphate, dilauryl phosphate, distearyl phosphate, diisostearyl phosphate, diphenyl phosphate, trimethyl phosphate, triethyl phosphate, triisodecyl phosphate, trilauryl phosphate, tristearyl phosphate, triisostearyl phosphate, and triphenyl phosphate; mono-, di-, or trialkyl(aryl)phosphines, such as methylphosphine, ethylphosphine, phenylphosphine, dimethylphosphine, diethylphosphine, diphenylphosphine, trimethylphosphine, triethylphosphine, and triphenylphosphine; alkyl(aryl)-halogen phosphines such as methyldichlorophosphine, ethyldichlorophosphine, phenyldichlorophosphine, dimethylchlorophosphine, diethylchlorophosphine, and diphenylchlorophosphine; mono-, di-, or trialkyl(aryl)phosphine oxides, such as methylphosphine oxide, ethylphosphine oxide, phenylphosphine oxide, dimethylphosphine oxide, diethylphosphine oxide, diphenylphosphine oxide, trimethylphosphine oxide, triethylphosphine oxide, and triphenylphosphine oxide; and tetraalkyl(aryl)phosphonium halides such as tetramethylphosphonium chloride, tetraethylphosphonium chloride, and tetraphenylphosphonium chloride. These organophosphorous compounds may be used alone, or two or more of these organophosphorous compounds may also be used in combination. In these organophosphorus compounds, alkyl(aryl) phosphonous acids, phosphite monoesters or diesters, phosphate monoesters or diesters, and alkyl(aryl)phosphonic acids may be preferred, and alkyl(aryl)phosphonous acids, phosphite monoesters or diesters, and phosphate monoesters or diesters may be more preferred, and alkyl(aryl)phosphonous acids and phosphate monoesters or diesters may particularly be preferred because these organophosphorous compounds have high catalytic activity and low coloration properties.

The amount of catalyst to be used in the cyclization and condensation reaction is not particularly limited, but for example, it may preferably be from 0.001% to 5% by mass, more preferably from 0.01% to 2.5% by mass, still more preferably from 0.01% to 1% by mass, and particularly preferably from 0.05% to 0.5% by mass, relative to the acrylic copolymer (a) or (b). When the amount of the catalyst to be used is smaller than 0.001% by mass, a reaction rate of the cyclized condensation reaction cannot sufficiently be improved in some cases. To the contrary, when the amount of the catalyst to be used is greater than 5% by mass, the resultant acrylic copolymer may be colored, or the acrylic copolymer may be cross-linked, thereby making melt forming difficult.

The time for adding a catalyst is not particularly limited, but for example, a catalyst can be added in the initial stage of the reaction, in the middle stage of the reaction, or in the both stages.

It may be preferred that a cyclized condensation reaction is carried out in the presence of a solvent and a devolatilization step is used together at the time of the cyclized condensation reaction. In this case, there are a pattern in which the devolatilization step is used together throughout the whole cyclized condensation reaction and a pattern in which the devolatilization step is not used over the whole process of the cyclized condensation reaction but used only in a part of the process. In the method using the devolatilization step together, reaction equilibrium becomes advantageous on the side of generation because an alcohol formed in the cyclized condensation reaction is forcefully removed by devolatilization.

The devolatilization step means a step of the removal treatment of volatile contents, such as a solvent and residual monomers, and an alcohol formed as a by-product by the cyclized condensation reaction introducing a lactone ring structure or a glutaric acid anhydride structure, under a condition of heating under a reduced pressure, if necessary. When this removal treatment is insufficient, a residual volatile content in the resultant acrylic copolymer becomes large, so that there may occur coloration by deterioration at the time of forming, and forming defects such as bubbles and silver streaks.

In the case of a pattern using the devolatilization step together throughout the whole cyclized condensation reaction, an apparatus to be used is not particularly limited, but for example, in order to carry out the present invention more effectively, there may preferably be used a devolatilization apparatus composed of a heat exchanger and a devolatilization vessel, an extruder equipped with a vent, or an apparatus in which a devolatilization apparatus and an extruder are tandemly arranged, and there may more preferably be used a devolatilization apparatus composed of a heat exchanger and a devolatilization vessel or an extruder equipped with a vent.

The temperature for reaction treatment in the case of using a devolatilization apparatus composed of a heat exchanger and a devolatilization vessel may preferably be from 150°C to 350°C, more preferably from 200°C to 300°C. When the temperature for reaction treatment is lower than 150°C, the cyclized condensation reaction becomes insufficient, so that a residual volatile content may be increased. To the contrary, when the temperature for reaction treatment is higher than 350°C, the resultant acrylic copolymer may cause coloration or decomposition.

The pressure for reaction treatment in the case of using a devolatilization apparatus composed of a heat exchanger and a devolatilization vessel may preferably be from 931 to 1.33 hPa (from 700 to 1 mmHg), more preferably from 798 to 66.5 hPa (from 600 to 50 mmHg). When the pressure for reaction treatment is higher than 931 hPa (700 mmHg), a volatile content containing an alcohol may easily remain. To the contrary, when the pressure for reaction treatment is lower than 1.33 hPa (1 mmHg), it may become difficult to carry out the step industrially.

In the case of using an extruder equipped with a vent, the extruder may have either one vent or at least two vents, but an extruder having at least two vents may be preferred.

The temperature for reaction treatment in the case of using an extruder equipped with a vent may preferably be from 150°C to 350°C, more preferably from 200°C to 300°C. When the temperature for reaction treatment is lower than 150°C, the cyclized condensation reaction becomes insufficient, so that a residual volatile content may be increased. To the contrary, when the temperature for reaction treatment is higher than 350°C, the resultant acrylic copolymer may cause coloration or decomposition.

The pressure for reaction treatment in the case of using an extruder equipped with a vent may preferably be from 931 to 1.33 hPa (from 700 to 1 mmHg), more preferably from 798 to 13.3 hPa (from 600 to 10 mmHg). When the pressure for reaction treatment is higher than 931 hPa (700 mmHg), a volatile content containing an alcohol may easily remain. To the contrary, when the pressure for reaction treatment is lower than 1.33 hPa (1 mmHg), it may become difficult to carry out the step industrially.

In the case of a pattern using the devolatilization step together throughout the whole cyclized condensation reaction, as described later, since a severe heat treatment condition may deteriorate the physical properties of the resultant low birefringent copolymer, the devolatilization step may preferably be carried out using a catalyst of the dealcoholization reaction as described above under as much a mild condition as possible using an extruder equipped with a vent, or the like.

Moreover, in the case of a pattern using the devolatilization step together throughout the whole cyclized condensation reaction, the acrylic copolymer (a) or (b) obtained at the polymerization step may preferably be introduced into a cyclized condensation reaction apparatus together with a solvent. In this case, the acrylic copolymer (a) or (b)

may be introduced again into a cyclized condensation reaction apparatus such as an extruder equipped with a vent, if necessary.

There may also be carried out a pattern using the devolatilization step not throughout the whole process but a part of the process of the cyclized condensation reaction. For example, this is a pattern in which the apparatus for producing the acrylic copolymer (a) or (b) is heated further, and if necessary, the devolatilization step is partially used together to allow the cyclized condensation reaction to progress to a certain extent in advance, followed by the cyclized condensation reaction using the devolatilization step together at the same time, thereby completing the reaction.

In the above-described pattern using the devolatilization step together throughout the whole cyclized condensation reaction, for example, when the acrylic copolymer (a) or (b) is subjected to heat treatment at a high temperature of around 250°C or higher using a twin screw extruder, a partial decomposition may occur before the cyclized condensation reaction by a difference of heat history, resulting in a deterioration of the physical properties of the resultant low birefringent copolymer. Therefore, if the cyclized condensation reaction is allowed to progress to a certain extent in advance before the cyclized condensation reaction using the devolatilization step together at the same time, a reaction condition in the latter half can be alleviated, so that a deterioration of the physical properties of the low birefringent polymer can be suppressed, which may be preferred. A particularly preferred pattern may include a pattern in which the devolatilization step is started with an interval after the start of the cyclized condensation reaction, that is, a pattern in which the hydroxy groups or carboxyl groups and the ester groups present in the molecular chain of the acrylic copolymer (a) or (b) obtained by the polymerization step is subjected to the cyclized condensation reaction in advance to raise the reaction rate of the cyclized condensation reaction to a certain extent, followed by the cyclized condensation reaction using the devolatilization step together at the same time. Specifically, for example, a preferred pattern may include a pattern in which the cyclized condensation reaction is allowed to progress to a certain extent using a kettle-shaped reactor in advance in the presence of a solvent, followed by completing the cyclized condensation reaction using a reactor equipped with a devolatilization apparatus such as a devolatilization apparatus composed of a heat exchanger and a devolatilization vessel, an extruder equipped with a vent, or the like. In particular, in the case of this pattern, it may be more preferred that a catalyst for the cyclized condensation reaction is present.

As described above, a method in which the hydroxy groups or carboxyl groups and the ester groups present in the molecular chain of the acrylic copolymer (a) or (b) obtained by the polymerization step is subjected to the cyclized condensation reaction in advance to raise the reaction rate of the cyclized condensation reaction to a certain extent, followed by the cyclized condensation reaction using the devolatilization step together at the same time is a preferred pattern obtaining a low birefringent copolymer in the present invention. This pattern can provide a low birefringent copolymer having a higher glass transition temperature, an increased cyclized condensation reaction rate, and excellent heat resistance. In this case, as an indication of the cyclized condensation reaction rate, for example, a mass decrease rate in a range of from 150°C to 300°C in the dynamic TG measurement shown in Examples may preferably be 2% or lower, more preferably 1.5% or lower, and still more preferably 1% or lower.

The reactor, which can be employed when the cyclized condensation reaction is carried out before the cyclized condensation reaction using the devolatilization step together at the same time, is not particularly limited, but examples thereof may include an autoclave, a kettle-shaped reactor, and a devolatilization apparatus composed of a heat exchanger and a devolatilization vessel. Furthermore, there can also be used an extruder equipped with a vent suitable for the cyclized condensation reaction using the devolatilization step together at the same time. In these reactors, an autoclave and a kettle-shaped reactor may particularly be preferred. However, even in the case of using a reactor such as an extruder equipped with a vent, the cyclized condensation reaction can be carried out under the same conditions as the reaction conditions in the autoclave or the kettle-shaped reactor by making the venting condition mild, ceasing the venting, or adjusting the temperature condition, the barrel condition, the screw shape, the operating condition of the screw, and the like.

In the case of carrying out the cyclized condensation reaction in advance before the cyclized condensation reaction using the devolatilization step together at the same time, examples thereof may include a method of: (i) bringing a mixture containing the acrylic copolymer (a) or (b) obtained at the polymerization step and a solvent to a reaction by adding a catalyst and heating; (ii) bringing the mixture to a reaction by heating without using a catalyst; and carrying out the (i) or (ii) under a pressure.

At the cyclized condensation step, the wording "mixture containing the acrylic copolymer (a) or (b) and a solvent" to be introduced to the cyclized condensation reaction means a polymerization reaction mixture obtained at the polymerization step itself, or a mixture obtained by once removing a solvent and then adding again a solvent suitable for the cyclized condensation reaction:

The solvent which can be added again at the time of the cyclized condensation reaction carried out in advance before the cyclized condensation reaction using the devolatilization step together at the same time is not particularly limited, and examples thereof may includes aromatic hydrocarbons such as toluene, xylene, and ethyl benzene; ketones such as methyl ethyl ketone and methyl isobutyl ketone; and chloroform, dimethylsulfoxide, tetrahydrofuran. These solvents may be used alone, or two or more of these solvents may also be used in combination. The same solvent as

used at the polymerization step may preferably be used.

The catalyst added in the method (i) may includes esterification catalysts or transesterification catalysts, such as p-toluene sulfonate, basic compounds, organic carboxylic acid salts, and carbonates, all of which are usually used, but in the present invention, the above-described organophosphorus compounds may preferably be used. The time for adding the catalyst is not particularly limited, and may be, for example, in the initial stage of the reaction, in the middle stage of the reaction, or in the both stages. The amount of the catalyst to be added is not particularly limited, and may preferably be, for example, from 0.001% to 5% by mass, more preferably from 0.01% to 2.5% by mass, still more preferably from 0.01% to 1% by mass, and particularly preferably from 0.05% to 0.5% by mass, relative to the mass of the acrylic copolymer (a) or (b). The heating temperature and the heating time in the method (i) are not particularly limited, and for example, the heating temperature may preferably be from room temperature to 180°C, more preferably from 50°C to 150°C, and the heating time may preferably be from 1 to 20 hours, more preferably from 2 to 10 hours. When the heating temperature is lower than room temperature or the heating time is shorter than 1 hour, the cyclized condensation reaction rate may be lowered. To the contrary, when the heating temperature is higher than 180°C or the heating time is longer than 20 hours, the resin may be colored or decomposed.

In the method (ii), for example, the polymerization reaction mixture obtained at the polymerization step may be heated without any further treatment using a pressure-resistant kettle-shaped reactor or the like. The heating temperature and the heating time in the method (ii) are not particularly limited, and for example, the heating temperature may preferably be from 100°C to 180°C, more preferably from 100°C to 150°C or higher, and the heating time may preferably be from 1 to 20 hours, more preferably from 2 to 10 hours. When the heating temperature is lower than 100°C or the heating time is shorter than 1 hour, the cyclized condensation reaction rate may be lowered. To the contrary, when the heating temperature is higher than 180°C or the heating time is longer than 20 hours, the resin may be colored or decomposed.

In any of the methods, depending on conditions, no problem may occur even under a pressure.

At the time of the cyclized condensation reaction carried out in advance before the cyclized condensation reaction using the devolatilization step together at the same time, no problem may occur, even if a part of the solvent vaporizes naturally during the reaction.

The mass decrease rate by dynamic TG measurement in a range of from 150°C to 300°C at the time of completion of the cyclized condensation reaction carried out in advance before the cyclized condensation reaction using the devolatilization step together at the same time, that is, just before the start of the devolatilization step, may preferably be 2% or lower, more preferably 1.5% or lower, and still more preferably 1% or lower. When the mass decrease rate is higher than 2%, the cyclized condensation reaction rate does not increase to a sufficiently high level, even if the cyclized condensation reaction using the devolatilization step together at the same time is subsequently carried out, so that the physical properties of the resultant low birefringent copolymer may become deteriorated. When the above cyclized condensation reaction is carried out, in addition to the copolymer (a) or (b), other thermoplastic resins may be allowed to coexist.

In the case of a pattern in which the hydroxy groups or the carboxyl groups and the ester groups present in the molecular chain of the acrylic copolymer (a) or (b) obtained at the polymerization step are subjected to the cyclized condensation reaction in advance to increase the cyclized condensation reaction rate to a certain extent, subsequently followed by the cyclized condensation reaction using the devolatilization step together at the same time, an acrylic copolymer, which is obtained by the cyclized condensation reaction carried out in advance (i.e., an acrylic copolymer in which at least part of the hydroxy groups or the carboxyl groups and the ester groups present in the molecular chain have been brought to the cyclized condensation reaction), and a solvent may be introduced without any further treatment to the cyclized condensation reaction using the devolatilization step together at the same time, or if necessary, the copolymer (i.e., the acrylic copolymer in which at least part of the hydroxy groups or the carboxyl groups and the ester groups present in the molecular chain have been brought to the cyclized condensation reaction) may be subjected to other treatments such as isolation followed by addition of a solvent again before being introduced to the cyclized condensation reaction using the devolatilization step together at the same time.

The devolatilization step is not limited to be completed at the same time as the cyclized condensation reaction, and may be completed with an interval after the completion of the cyclized condensation reaction.

The number of foreign particles contained in an acrylic copolymer comprising a lactone ring structure or a glutaric acid anhydride structure which can provide a positive retardation in the molecular chain together with a structural unit which can provide a negative retardation in the molecular chain or an acrylic copolymer comprising an N-substituted maleimide ring structure which can provide a positive retardation in the molecular chain together with a structural unit which can provide a negative retardation in the molecular chain, these acrylic copolymers being obtained by subjecting the acrylic copolymer (a) or (b) to the cyclized condensation reaction, can be decreased by filtering a solution or a melt of the acrylic copolymer with, for example, a leaf disc-type polymer filter having a filtration accuracy of from 1.5 to 15 μm at the production step of the acrylic copolymer and/or at the film formation step.

<<Applications and forming of low birefringent copolymer>>

The acrylic copolymer of the present invention is a low birefringent material which has excellent transparency and heat resistance, also has other desired properties including mechanical strength and forming processability, has low coloration properties when no nitrogen atom is contained, and particularly high optical isotropy. Thus, the acrylic copolymer of the present invention is useful for applications such as optical lenses, optical prisms, optical films, optical fibers, and optical disks. In these applications, there may particularly be preferred optical lenses, optical prisms, optical films, and the like.

The acrylic copolymer of the present invention can be formed into various shapes according to applications. The shapes into which the acrylic copolymer of the present invention can be formed may include films, sheets, plates, disks, blocks, balls, lenses, rods, strands, cords, and fibers. The forming method is not particularly limited, but can appropriately be selected according to shapes from the heretofore known forming methods.

The following will describe in detail a method of producing a film from the acrylic copolymer of the present invention as an example of an optical film which is a particularly preferred application.

<Production of film>

To produce a film from the acrylic copolymer of the present invention, for example, raw materials of the film are pre-blended using any of the heretofore known mixers such as omni mixers, followed by extrusion-kneading the resultant mixture. In this case, the mixer used for the extrusion-kneading is not particularly limited, but there may be used, for example, any of the heretofore known mixers including extruders such as single screw extruders and twin screw extruders, and pressure kneaders.

The film forming method may include the heretofore known film forming methods such as solution casting method, melt extrusion method, calender method, and compression forming method. In these film forming methods, solution casting method and melt extrusion method may particularly be preferred.

The solvent used in the solution casting method may include aromatic hydrocarbons such as benzene, toluene, and xylene; aliphatic hydrocarbons such as cyclohexane and decalin; esters such as ethyl acetate and butyl acetate; ketones such as acetone, methyl ethyl ketone, and methyl isobutyl ketone; alcohols such as methanol, ethanol, isopropanol, butanol, isobutanol, methyl cellosolve, ethyl cellosolve, and butyl cellosolve; ethers such as tetrahydrofuran and dioxane; halogenated hydrocarbons such as dichloromethane, chloroform, and carbon tetrachloride; dimethylformamide; and dimethylsulfoxide. These solvents may be used alone, or two or more of these solvents may also be used in combination.

The apparatus for carrying out the solution casting method may include drum-type casting machines, band-type casting machines, and spin coaters.

The melt extrusion method may includes T die method and inflation method, and the temperature at the forming in the method is not particularly limited, but can appropriately be adjusted according to the glass transition temperature of raw materials of the film, but it may preferably be from 150°C to 350°C, more preferably from 200°C to 300°C.

In the case where a film is formed by T-die method, a roll-shaped film can be obtained by attaching a T die to an end portion of any of the known single screw extruders or twin screw extruders, extruding raw materials in the form of a film from the extruder, and winding the film. At this time, it is also possible to carry out uniaxial drawing by appropriately adjusting the temperature of winding rolls and drawing the film in the direction of extrusion. Moreover, simultaneous biaxial drawing, sequential biaxial drawing, and the like can be carried out by drawing the film in the direction perpendicular to the direction of extrusion.

The film made of the acrylic copolymer of the present invention may be either an undrawn film or a drawn film. In the case of a drawn film, it may be either a uniaxially drawn film or a biaxially drawn film. In the case of a biaxially drawn film, it may be either a simultaneously biaxially drawn film or a sequentially biaxially drawn film. When biaxially drawing is carried out, the mechanical strength of the film is enhanced and the film performance is improved. With respect to the acrylic copolymer of the present invention, mixing of any of the other thermoplastic resins makes it possible to suppress a retardation, even if a film is drawn, thereby obtaining a film maintaining optical isotropy.

The drawing temperature may preferably be near the glass transition temperature of the acrylic copolymer which is a raw material of a film. Specifically, it may preferably be in a range of from (glass transition temperature - 30°C) to (glass transition temperature + 100°C), more preferably from (glass transition temperature - 20°C) to (glass transition temperature + 80°C). When the drawing temperature is lower than (glass transition temperature - 30°C), a sufficient draw ratio cannot be obtained in some cases. To the contrary, when the drawing temperature is higher than (glass transition temperature + 100°C), the flow of the copolymer may occur, so that it may become impossible to carry out stable drawing.

The draw ratio defined by the area ratio may preferably be in a range of from 1.1 to 25 times, more preferably from 1.3 to 10 times. When the draw ratio is lower than 1.1 times, an improvement of toughness resulting from drawing

cannot be obtained in some cases. To the contrary, when the draw ratio is higher than 25 times, an effect by raising the draw ratio cannot be observed in some cases.

The drawing speed may preferably be in a range of from 10%/min. to 20,000%/min., more preferably from 100%/min. to 10,000%/min. in one direction. When the drawing speed is lower than 10%/min., it may take time to obtain an enough draw ratio, and the producing cost may become high. To the contrary, when the drawing speed is higher than 20,000%/min., the breaking of a drawn film and the like may occur.

The film made of the acrylic copolymer of the present invention can be subjected to heat treatment (annealing) and the like after drawing treatment to stabilize the optical isotropy and the mechanical properties. The conditions of heat treatment may appropriately be selected similarly to those of heat treatment for the heretofore known drawn films, and are not particularly limited.

The film made of the acrylic copolymer of the present invention may preferably have a thickness of from 5 to 200 μm, more preferably from 10 to 100 μm. When the thickness is smaller than 5 μm, the strength of the film decreases, and when the durability test is carried out in the state of being stuck to other parts, crimp may be increased. To the contrary, when the thickness is greater than 200 μm, the transparency of the film is decreased, and the moisture permeability of the film becomes small, and when a water type adhesive is used for being stuck to other parts, the drying speed of water as the solvent therefor may be decreased.

The surface wet tensile force of the film made of the acrylic copolymer of the present invention may preferably be 40 mN/m or higher, more preferably 50 mN/m or higher, and still more preferably 55 mN/m or higher. When the surface wet tensile force is at least 40 mN/m or higher, the adhesive strength of the film made of the acrylic copolymer of the present invention with other parts is further improved. In order to adjust the surface wet tensile force, for example, corona discharge treatment, ozone spraying, ultraviolet irradiation, flame treatment, chemical treatment, and other heretofore known surface treatments can be carried out.

The film made of the acrylic copolymer of the present invention may contain various additives. The additives may include antioxidants such as hindered phenol antioxidants, phosphorous antioxidants, and sulfuric antioxidants; stabilizers such as light resistance stabilizers, weather resistance stabilizers, and thermostabilizers; reinforcing materials such as glass fiber and carbon fiber; ultraviolet absorbers such as phenyl salicylate, (2,2'-hydroxy-5-methylphenyl) benzotriazole, and 2-hydroxybenzophenone; near-infrared absorbers; flame retardants such as tris(dibromopropyl) phosphate, triallyl phosphate, and antimony oxide; antistatic agents such as anionic surfactants, cationic surfactants, and nonionic surfactants; colorants such as inorganic pigments, organic pigments, and dyes; organic fillers and inorganic fillers; resin modifiers; plasticizers; lubricants; and antistatic agents.

The contents of additives in the film made of the acrylic copolymer may preferably be from 0% to 5% by mass, more preferably from 0% to 2% by mass, and still more preferably from 0% to 0.5% by mass.

## EXAMPLES

The present invention will be explained below in detail by reference to Examples, but the present invention is not limited to these Examples. The present invention can be put into practice after appropriate modifications or variations within a range meeting the gists described above and later, all of which are included in the technical scope of the present invention.

First, the following will describe a method for the evaluation of an acrylic copolymer and a film, the acrylic copolymer comprising a lactone ring structure as a structural unit which can provide a positive retardation together with a structural unit which can provide a negative retardation in the molecular chain.

### <Polymerization reaction rate and copolymer composition analysis>

A reaction rate at the time of polymerization reaction and a content of a specific monomer unit in the acrylic copolymer were determined by measuring the amounts of unreacted monomers in the resultant polymerization reaction mixture using gas chromatography (GC17A, available from SHIMADZU CORPORATION).

### <Dynamic TG>

An acrylic copolymer (or an acrylic copolymer solution or pellets) was dissolved in or diluted with tetrahydrofuran, and put into hexane or methanol in excess to cause reprecipitation. Then, a precipitate taken out was subjected to vacuum drying (1 mmHg (1.33 hPa), 80°C, 3 hours or longer) to remove volatile components and the like. The resultant resin in the form of a white solid was analyzed by the following method (dynamic TG method).
Measuring apparatus: a thermogravimetry differential thermal balance (Thermo Plus 2 TG-8120 dynamic TG, available from Rigaku Corporation);
Measuring condition: the amount of a sample was from 5 to 10 mg;

Temperature rising speed: 10°C/min.;
Ambient atmosphere: nitrogen flow of 200 mL/min.;
Method: step-wise isothermal control method (controlling the value of the mass decreasing speed to be 0.005%/s or lower in the range of from 60°C to 500°C).

<Content ratio of lactone ring structure>

First, based on the amount of mass decrease which was caused when all hydroxy groups were dealcoholized as methanol from the composition of the resultant acrylic copolymer, the reaction rate in the dealcoholization was determined from the amount of mass decrease caused by the dealcoholization reaction from 150°C which was before the start of the mass decrease to 300°C which was before the start of the decomposition of the acrylic copolymer in dynamic TG measurement.

More specifically, in the dynamic TG measurement of an acrylic copolymer having a lactone ring structure, the measurement of a mass decrease rate in a range of from 150°C to 300°C is carried out, and the measured value obtained is regarded as the measured mass decrease rate (X). On the other hand, the mass decrease rate obtained assuming that, from the composition of the acrylic copolymer, all the hydroxy groups contained in the composition of the acrylic copolymer become alcohols to be involved in the formation of lactone rings, followed by dealcoholization (i.e., the mass decrease rate calculated assuming that 100% dealcoholization reaction occurred in the composition) is regarded as the theoretical mass decrease rate (Y). The theoretical mass decrease rate (Y) can be, more specifically, calculated from the molar ratio of a raw material monomer having a structure (i.e., a hydroxy group) to be involved in the dealcoholization reaction in the acrylic copolymer, that is, the content ratio of a raw material monomer in the composition of the acrylic copolymer. These values are substituted for the dealcoholization calculating formula:

1 - (the measured mass decrease rate (X) / the theoretical mass decrease rate (Y))

and the calculated value is written by the percentage (%), and thus the reaction rate in the dealcoholization reaction can be obtained. Then, assuming that the prescribed formation of a lactone ring occurred just for the reaction rate in the dealcoholization, the content ratio of a lactone ring structure in the acrylic copolymer can be calculated by multiplying the reaction rate in the dealcoholization with the content (i.e., the mass ratio) of a raw material monomer having a structure (i.e., a hydroxy group) to be involved in the formation of a lactone ring in the composition of the acrylic copolymer.

As an example, the content ratio of a lactone ring structure in the pellets obtained in Example 1 to be explained later is calculated. The theoretical mass decrease rate(Y) of this acrylic copolymer is calculated as follows. Since the molecular weight of methanol is 32, the molecular weight of methyl 2-(hydroxymethyl)-acrylate is 116, and the content ratio (i.e., the mass ratio) of methyl 2-(hydroxymethyl)acrylate in the acrylic copolymer is 20.0% by mass, it is found to be (32/116) x 20.0 = about 5.52% by mass. On the other hand, the measured mass decrease rate (X) by dynamic TG measurement was 0.25% by mass. When these values are substituted for the above dealcoholization calculating formula, the value becomes 1 - (0.25/5.52) = about 0.955, and therefore, the reaction rate in the dealcoholization is 95.5%. In the acrylic copolymer, assuming that the formation of a lactone ring occurred just for the reaction rate in the dealcoholization, when the content ratio (20.0% by mass) of methyl 2-(hydroxymethyl)acrylate in the acrylic copolymer is multiplied by the dealcoholization reaction rate (95.5% = 0.955), the content ratio of a lactone ring structure in the acrylic copolymer becomes 19.1% (20.0% x 0.955) by mass.

<Weight average molecular weight>

The weight average molecular weight was determined by polystyrene calibration using gel permeation chromatography (GPC system, available from Tosoh Corporation).

<Glass transition temperature>

The glass transition temperature (Tg) was calculated by midpoint method from a DSC curve obtained by heating about 10 mg of a sample from room temperature to 200°C at a temperature rising speed of 10°C/min. under an atmosphere of nitrogen gas using a differential scanning calorimeter (DSC-8230, available from Rigaku Corporation) with α-alumina as a reference sample in accordance with JIS-K-7121.

<Total light transmittance>

The total light transmittance was measured using a turbidity meter (NDH-1001DP, available from Nippon Denshoku Industries Co., Ltd.).

<Retardation in plane-wise direction>

The retardation per 100 μm of thickness in the in-plane direction of a film was determined by measuring a retardation at a wave length of 589 nm using an automatic birefringence analyzer (KOBRA-21ADH, available from Oji Scientific Instruments) and converting the obtained value in terms of a thickness of 100 μm of the film.

<Yellowing index (YI) after heating>

First, 1 g of an acrylic copolymer was taken as a sample in a test tube and heated at 280°C using a heat block under an atmosphere of air for 60 minutes. Then, the sample was taken out and a 15% by mass solution of this sample dissolved in chloroform was put into a quartz cell having an optical path length of 1 cm. The yellowing index (YI) after heating was measured with a transmitted light using a color difference meter (SZ-Σ90, available from Nippon Denshoku Industries Co., Ltd.) in accordance with JIS-K-7103.

<<Example 1>>

First, a 30-L reaction vessel equipped with a stirring device, a temperature sensor, a condenser, and a nitrogen gas introducing tube was charged with 7 kg of methyl methacrylate, 2 kg of methyl 2-(hydroxymethyl)-acrylate, 1 kg of styrene, 10 kg of methyl isobutyl ketone, and 5 g of n-dodecyl mercaptan.

The reaction vessel was heated to 105°C, while nitrogen gas was introduced into the reaction vessel, and when reflux started, 5 g of t-amyl 3,5,5-trimethyl-hexanoate was added as a polymerization initiator, while a solution containing 10 g of t-amyl 3,5,5-trimethyl-hexanoate dissolved in 230 g of methyl isobutyl ketone was added dropwise for 2 hours at the same time, to carry out solution polymerization under reflux at from about 105°C to 120°C, followed by allowing the mixture to mature for further 4 hours.

To the resultant acrylic copolymer solution, 30 g of a mixture of stearyl phosphate and distearyl phosphate (Phoslex A-18, available from Sakai Chemical Industry Co. Ltd.) was added to carry out cyclized condensation reaction under reflux at from about 90°C to 120°C for 5 hours. Then, the resultant acrylic copolymer solution was introduced, at the throughput speed of 2.0 kg/h in terms of the amount of resin, into a vent-type twin screw extruder (φ = 29.75 mm, L/D = 30) in which the barrel temperature was 260°C, the rotation speed was 100 rpm, the degree of reduced pressure was from 13.3 to 400 hPa (from 10 to 300 mmHg), the number of rear vent was one, and the number of fore vent was four. In this extruder, cyclized condensation reaction and devolatilization were carried out, and transparent pellets of a low birefringent copolymer were obtained by extrusion. The weight average molecular weight of the pellets was 145,000 as determined by gel permeation chromatography. The glass transition temperature of the pellets was 127°C as determined by DSC measurement.

The resultant pellets were dissolved in methyl ethyl ketone to prepare an undrawn film having a thickness of 60 μm by solution casting method. Further, this undrawn film was uniaxially drawn under such conditions that the drawing temperature was at 100°C, the drawing speed was at 0.1 m/min., and the draw ratio was 1.5 times, thereby obtaining a drawn film having a thickness of 50 μm. The optical properties of these films were measured, and it was found that the undrawn film had a total light transmittance of 93% and a retardation of 0.9 nm per 100 μm of thickness in the in-plane direction of the film, and the drawn film had a retardation of 7.0 nm per 100 μm of thickness in the in-plane direction of the film. The results are shown in Table 1.

<<Comparative Example 1>>

Transparent pellets of a low birefringent copolymer were obtained in the same manner as described in Example 1, except that the same reaction vessel as used in Example 1 was charged with 8 kg of methyl methacrylate, 2 kg of methyl 2-(hydroxymethyl)acrylate, 10 kg of methyl isobutyl ketone, and 5 g of n-dodecyl mercaptan. The weight average molecular weight of the pellets was 150,000 as determined by gel permeation chromatography. The glass transition temperature of the pellets was 131°C as determined by DSC measurement.

The resultant pellets were formed into a film under the same conditions as used in Example 1, thereby preparing an undrawn film having a thickness of 60 μm. Furthermore, this undrawn film was drawn under the same conditions as used in Example 1, thereby preparing a drawn film having a thickness of 50 μm. The optical properties of these films were measured, and it was found that the undrawn film had a total light transmittance of 93% and a retardation of 1.2

nm per 100 μm of thickness in the in-plane direction of the film, and the drawn film had a retardation of 33.5 nm per 100 μm of thickness in the in-plane direction of the film. The results are shown in Table 1.

<<Comparative Example 2>>

The pellets obtained in Comparative Example 1 and an acrylonitrile-styrene resin (TOYO AS AS20, available from TOYO-STYRENE CO., LTD.) were kneaded at a mass ratio of 90/10 and extruded using a single screw extruder (with a 30 mmφ screw), thereby obtaining transparent pellets.
The weight average molecular weight of the pellets was 150,000 as determined by gel permeation chromatography. The glass transition temperature of the pellets was 127°C as determined by DSC measurement.
The resultant pellets were formed into a film under the same conditions as used in Example 1, thereby preparing an undrawn film having a thickness of 60 μm. Furthermore, the undrawn film was drawn under the same conditions as used in Example 1, thereby preparing a drawn film having a thickness of 50 μm. The optical properties of these films were measured, and it was found that the undrawn film had a total light transmittance of 93.5% and a retardation of 0.5 nm per 100 μm of thickness in the in-plane direction of the film, and the drawn film had a retardation of 2.8 nm per 100 μm of thickness in the in-plane direction of the film. The results are shown in Table 1.

TABLE 1

| | Acrylic copolymer (Composition* is by mass ratio) | Glass transition temperature (°C) | Retardation per 100 μm of thickness of film in in-plane direction (nm) | | | Total light transmittance (%) | Yellow index (YI) after heating |
|---|---|---|---|---|---|---|---|
| | | | After drawing by 1.5 times | Before drawing | Difference between before and after drawing | | |
| Example 1 | MHMA/MMA/ST = 20/70/10 | 127 | 7.0 | 0.9 | 6.1 | 93 | 10 |
| Comp.EX. 1 | MHMA/MMA = 30/70 | 131 | 33.5 | 1.2 | 32.3 | 93 | 10 |
| Comp.Ex. 2 | MHMA/MMA = 30/70 + AS | 127 | 2.8 | 0.5 | 2.3 | 93.5 | 30 |

*MHMA represents methyl 2-(hydroxymethyl)acrylate; MMA, methyl methacrylate; ST, styrene; and AS, acrylonitrile-styrene resin.
MHMA and MMA form a lactone ring structure by cyclized condensation.

As can be seen from Table 1, the acrylic copolymer of Example 1 has a lactone ring structure which can provide a positive retardation and a structural unit which can provide a negative retardation, and therefore, the acrylic copolymer of Example 1 has excellent transparency and heat resistance, also has other desired properties including low coloration properties, mechanical strength, and forming processability, and even after being drawn by 1.5 times, has a very low retardation particularly in the in-plane direction, which makes the acrylic copolymer of Example 1 into a low birefringent copolymer.
In contrast, the acrylic copolymer of Comparative Example 1 has no structural unit which can provide a negative retardation, and therefore, the acrylic copolymer of Comparative Example 1 has excellent transparency and heat resistance, and has a low yellowing index (YI) after heating, but after being drawn by 1.5 times, has a very high retardation, particularly in the in-plane direction, which makes the acrylic copolymer of Comparative Example 1 into a high birefringent copolymer. The thermoplastic resin composition of Comparative Example 2 has excellent transparency and heat resistance, but the thermoplastic resin composition of Comparative Example 1 is a blend of two resins and is not a single acrylic copolymer, so that the thermoplastic resin composition of Comparative Example 1 is outside the scope of the present invention. As can be seen from Comparative Example 2, there is a general tendency that a yellowing index (YI) becomes higher, if resins are blended.
Thus, it is understood that the copolymerization of a structural unit which can provide a negative retardation in advance with a lactone ring-containing polymer, instead of blending another resin with the lactone ring-containing polymer, makes it possible that the adjustment of birefringence by blending becomes unnecessary and therefore a low birefringent

material having high optical isotropy can easily be obtained.

Then, the following will describe the method for the evaluation of an acrylic copolymer and a film, the acrylic copolymer having a structural unit derived from an aromatic monomer as a structural unit which can provide a negative retardation together with a structural unit which can provide a positive retardation in the molecular chain.

<Weight average molecular weight>

The weight average molecular weight was determined by polystyrene calibration using gel permeation chromatography (GPC system, available from Tosoh Corporation).

<Glass transition temperature>

The glass transition temperature (Tg) was calculated by origin method from a DSC curve obtained by heating about 10 mg of a sample from room temperature to 200°C at a temperature rising speed of 20°C/min. under an atmosphere of nitrogen gas using a differential scanning calorimeter (DSC-8230, available from Rigaku Corporation) with α-alumina as a reference sample in accordance with JIS-K-7121.

<Total light transmittance>

The total light transmittance was measured using a turbidity meter (NDH-1001DP, available from Nippon Denshoku Industries Co., Ltd.).

<Retardation>

The retardation was determined by measuring a retardation at a wave length of 589 nm using an automatic birefringence analyzer (KOBRA-21ADH, available from Oji Scientific Instruments) and converting the obtained value in terms of a thickness of 100 μm of the film.

<Yellowing index (YI)>

First, a 15% by mass solution containing an acrylic polymer as a sample dissolved in chloroform was put into a quartz cell having an optical path length of 1 cm. The yellowing index (YI) was measured with a transmitted light using a color difference meter (SZ-Σ90, available from Nippon Denshoku Industries Co., Ltd.) in accordance with JIS-K-7103.

<Foreign particles>

With respect to the number of foreign particles, 1 g of an acrylic copolymer as a sample was dissolved in a clean solvent, and foreign particles having an average particle diameter of 20 μm or greater were counted as the foreign particles using a particle counter (SUSS-C16 HCB-LD-50AC, available from PARTICLE MEASURING SYSTEMS INC.)

<Flexibility>

In accordance with the "flexibility" of JIS-K-5400 8.1 (year 1994 version), a sample film was left undisturbed under an atmosphere of 25°C and 65% RH air for 1 hour or longer, and the sample film was then bent to a bending radius of 1 mm at 180 degrees over about 1 second. In the case of an uniaxially drawn film, a test was carried out in the direction of drawing and in the direction perpendicular to the direction of drawing, respectively. In the case of a biaxially drawn film, a test was carried out in the two mutually perpendicular directions of drawing. The case where no crack was formed in both directions was evaluated as "o"; the case where cracks were formed in only one direction was evaluated as "Δ"; and the case where cracks were formed in both directions was evaluated as "x".

<<Example 2>>

First, a 30-L reaction vessel equipped with a stirring device, a temperature sensor, a condenser, and a nitrogen gas introducing tube was charged with 7,950g of methyl methacrylate, 1,500g of methyl 2-(hydroxymethyl)-acrylate, 550g of styrene, and 10,000g of toluene.

The reaction vessel was heated to 105°C, while nitrogen gas was introduced into the reaction vessel, and when reflux started, 12 g t-amyl peroxyisononanoate was added as a polymerization initiator, while a solution containing 24 g of t-amyl peroxyisononanoate dissolved in 136 g of toluene was added dropwise for 2 hours at the same time, to carry

out solution polymerization under reflux at from about 105°C to 110°C, followed by allowing the mixture to mature for further 4 hours.

To the resultant acrylic copolymer solution, 10g of octyl phosphate (Phoslex A-8, available from Sakai Chemical Industry Co. Ltd.) was added to carry out cyclized condensation reaction under a pressure at about 120°C for 5 hours. Then, the resultant acrylic copolymer solution was introduced, at the throughput speed of 2.0 kg/h in terms of the amount of resin, into a vent-type twin screw extruder (φ = 29.75 mm, L/D = 30) equipped with five leaf disc-type polymer filters (5 inches (12.7 cm)), available from NAGASE & CO., LTD.) having a filtration accuracy of 10 μm, in which the number of rear vent was one and the number of front vent was four. In this extruder, devolatilization treatment and polymer filter treatment was carried out at the same time under the conditions that the barrel temperature was 240°C, the rotation speed was 120 rpm, and the degree of reduced pressure was from 13.3 to 400 hPa (from 10 to 300 mmHg). During the treatments, zinc octoate (Nikka Octhix Zinc, available from NIHON KAGAKU SANGYO CO., LTD.) was poured in the middle of the second front vent and the third front vent, as a foam inhibitor such that it was to be 1,400 ppm, relative to an acrylic copolymer obtained in the form of a toluene solution.

A water bath filled with clean cooling water treated by filtration was disposed at the end portion of the twin screw extruder to cool a strand, which is introduced into a pelletizer, thereby obtaining transparent pellets of a heat resistance acrylic resin having a structural unit with a lactone ring and a structural unit derived from an aromatic monomer. The weight average molecular weight of the pellets was 135,000 as determined by gel permeation chromatography. The glass transition temperature of the pellets was 124°C as determined by DSC measurement. During the production of the pellets, a clean space was provided from the die to the pelletizer such that the cleanliness of environment became 5,000 or lower.

The pellets of the resultant acrylic copolymer were fed into a single screw extruder with a vent, having a barrier flight screw. Moreover, a nitrogen introducing tube was provided to a lower portion of a hopper to introduce nitrogen gas into the extruder. While the pellets were fed from an opening of the vent, the pellets were melt by the barrier flight screw and filtered with a leaf disc-type polymer filter (5 inches (12.7 cm), available from NAGASE & CO., LTD.) having a filtration accuracy of 5 μm using a gear pump, followed by extrusion from T die onto a chill roll, thereby forming a film.

The resultant film was uniaxially drawn under the conditions that the drawing temperature was 130°C, the drawing speed was 400%/min., and the draw ratio was 2 times, using an autograph (AGS-100D, available from SHIMADZU CORPORATION), thereby obtaining a drawn film having a thickness of 80 μm. The optical properties of this drawn film was measured, and it was found that the drawn film had a total light transmittance of 93 %, a retardation of 5.6 nm per 100 μm of thickness in the in-plane direction of the film, and a retardation of 1.4 nm per 100 μm of thickness in the thickness direction of the film. The results are shown in Table 2.

<<Example 3>>

Transparent pellets of an acrylic copolymer having a structural unit with an N-phenylmaleimide ring and a structural unit derived from an aromatic monomer were obtained in the same manner as described in Example 2, except that the composition of monomers charged into the reaction vessel was composed of 8,800 g of methyl methacrylate, 1,000 g of N-phenylmaleimide, and 200 g of styrene and that the cyclized condensation step was not carried out and the foam inhibitor was not poured during the devolatilization treatment. The weight average molecular weight of the pellets was 160,000 as determined by gel permeation chromatography. The glass transition temperature of the pellets was 126°C as determined by DSC measurement.

Using the resultant pellets of the acrylic copolymer, an undrawn film and a drawn film were obtained in the same manner as described in Example 2. The optical properties of this drawn film were measured and it was found that the drawn film had a total light transmittance of 89 %, a retardation of 8.8 nm per 100 μm of thickness in the in-plane direction of the film, and a retardation of 4.3 nm per 100 μm of thickness in the thickness direction of the film. The results are shown in Table 2.

<<Example 4>>

Transparent pellets of an acrylic copolymer having a structural unit with a glutaric acid anhydride structure and a structural unit derived from an aromatic monomer was obtained in the same manner as described in Example 2, except that the composition of monomers charged into the reaction vessel was composed of 8,000 g of methyl methacrylate, 1,000 g of methacrylic acid, and 1,000 g of styrene. The weight average molecular weight of the pellets was 128,000 as determined by gel permeation chromatography. The glass transition temperature of the pellets was 124°C as determined by DSC measurement.

Using the resultant pellets of the acrylic copolymer, an undrawn film and a drawn film were obtained in the same manner as described in Example 2. The optical properties of the drawn film were measured and it was found that the drawn film had a total light transmittance of 92 %, a retardation of 7.2 nm per 100 μm of thickness in the in-plane

direction of the film, and a retardation of 3.2 nm per 100 μm of thickness in the thickness direction of the film. The results are shown in Table 2.

<<Comparative Example 3>>

Transparent pellets of an acrylic copolymer having a structural unit with an N-phenylmaleimide ring but having no structural unit derived from an aromatic monomer was obtained in the same manner as described in Example 2, except that the composition of monomers charged into the reaction vessel was composed of 9,000g of methyl methacrylate and 1,000 g of N-phenylmaleimide and that the cyclized condensation step was not carried out and that a foam inhibitor was not poured during the devolatilization treatment. The weight average molecular weight of the pellets was 170,000 as determined by gel permeation chromatography. The glass transition temperature of the pellets was 125°C as determined by DSC measurement.

Using the resultant pellets of the acrylic copolymer, an undrawn film and a drawn film were obtained in the same manner as described in Example 2. The optical properties of the drawn film were measured and it was found that the drawn film had a total light transmittance of 92 %, a retardation of 51 nm per 100 μm of thickness in the in-plane direction of the film, and a retardation of 58 nm per 100 μm of thickness in the thickness direction of the film. The results are shown in Table 2.

<<Comparative Example 4>>

Transparent pellets of an acrylic copolymer having a glutaric acid anhydride structure but having no structural unit derived from an aromatic monomer was obtained in the same manner as described in Example 2, except that the composition of monomers charged into the reaction vessel was composed of 8,000 g of methyl methacrylate and 2,000 g of methacrylic acid. The weight average molecular weight of the pellets was 165,000 as determined by gel permeation chromatography. The glass transition temperature of the pellets was 125°C as determined by DSC measurement.

Using the resultant pellets of the acrylic copolymer, an undrawn film and a drawn film were obtained in the same manner as described in Example 2. The optical properties of the drawn film were measured and it was found that the drawn film had a total light transmittance of 94 %, a retardation of 65 nm per 100 μm of thickness in the in-plane direction of the film, and a retardation of 82 nm per 100 μm of thickness in the thickness direction of the film. The results are shown in Table 2.

TABLE 2

| | Acrylic copolymer (Composition* is by mass ratio) | Glass transition temperature (°C) | Retardation per 100 μm of thickness of film (nm) | | Total light transmittance (%) | Yellow index (YI) after heating | Number of foreign particles (pieces/g) | Flexibility |
|---|---|---|---|---|---|---|---|---|
| | | | In-plane direction | Thickness direction | | | | |
| Example 2 | MHMA/MMA/ST = 15/79.5/5.5 | 124 | 5.6 | 1.4 | 93 | 0.7 | 5 | o |
| Example 3 | PMI/MMA/ST = 10/88/2 | 126 | 8.8 | 4.3 | 89 | 3.1 | 10 | o |
| Example 4 | MAA/MMA/ST = 10/80/10 | 124 | 7.2 | 3.2 | 92 | 0.9 | 7 | o |
| Comp.Ex.3 | PMI/MMA = 10/90 | 125 | 51 | 58 | 92 | 3.0 | 280 | o |
| Comp.Ex.4 | MAA/MMA = 20/80 | 125 | 65 | 82 | 94 | 0.8 | 305 | o |

*MHMA represents methyl 2-(hydroxymethyl)acrylate; MMA, methyl methacrylate; ST, styrene; PMI, N-phenylmaleimide; and MAA, methacrylic acid. MHMA and MMA form a lactone ring structure by cyclized condensation, and MAA and MMA form a glutaric acid anhydride structure by cyclized condensation.

As can be seen from Table 2, the acrylic copolymer of Example 2 has a lactone ring structure which can provide a positive retardation and a structural unit derived from an aromatic monomer which can provide a negative retardation, and therefore, the acrylic copolymer of Example 2 has excellent transparency and heat resistance, also has other desired properties including low coloration properties, mechanical strength after being drawn, and forming processability, and has very low retardations in the in-plane direction and in the thickness direction, which makes the acrylic copolymer of Example 2 into a low birefringent copolymer. Moreover, the acrylic copolymer of Example 3 has an N-substituted maleimide ring structure which can provide a positive retardation and a structural unit derived from an aromatic monomer which can provide a negative retardation, and therefore, the acrylic copolymer of Example 3 has a slightly high yellowing index (YI) because of its containing nitrogen atoms, but has excellent transparency and heat resistance, also has other desired properties including mechanical strength after being drawn, and forming processability, and has very low retardations in the in-plane direction and in the thickness direction, which makes the acrylic copolymer of Example 3 into a low birefringent copolymer. Furthermore, the acrylic copolymer of Example 4 has a glutaric acid anhydride structure which can provide a positive retardation and a structural unit derived from an aromatic monomer which can provide a negative retardation, and therefore, the acrylic copolymer of Example 4 has excellent transparency and heat resistance, also has other desired properties including low coloration properties, mechanical strength after being drawn, and forming processability, and has very low retardations in the in-plane direction and in the thickness direction, which makes the acrylic copolymer of Example 4 into a low birefringent copolymer.

In contrast, the acrylic copolymer of Comparative Example 3 has an N-substituted maleimide ring structure which can provide a positive retardation, but has no structural unit which can provide a negative retardation, and therefore, the acrylic copolymer of Comparative Example 1 has excellent transparency and heat resistance, but has a slightly high yellowing index (YI) because of its containing nitrogen atoms, and has very high retardations in the in-plane direction and in the thickness direction, which makes the acrylic copolymer of Comparative Example 1 into a high birefringent copolymer. Moreover, the acrylic copolymer of Comparative Example 4 has a glutaric acid anhydride structure which can provide a positive retardation, but has no structural unit which can provide a negative retardation, and therefore, the acrylic copolymer of Comparative Example 4 has excellent transparency and heat resistance, and also has other desired properties including low coloration properties, mechanical strength after being drawn, and forming processability, but has very high retardations in the in-plane direction and in the thickness direction, particularly after being drawn, which makes the acrylic copolymer of Comparative Example 4 into a high birefringent copolymer.

Thus, it is understood that the copolymerization of a structural unit which can provide a positive retardation and a structural unit which can provide a negative retardation in advance with an acrylic polymer, instead of blending a resin for adjusting a retardation with the acrylic polymer, makes it possible that the adjustment of birefringence by blending becomes unnecessary and therefore a low birefringent material having high optical isotropy can easily be obtained.

INDUSTRIAL APPLICABILITY

The acrylic copolymer of the present invention has excellent transparency and heat resistance, also has other desired properties including mechanical strength and forming processability, has low coloration properties when no nitrogen atom is contained, and particularly has high optical isotropy; therefore, the acrylic copolymer of the present invention can widely be used for optical and other applications, and makes a great contribution, particularly in the fields related to optical materials.

## Claims

**1.** An acrylic copolymer comprising a lactone ring structure which can provide a positive retardation and a structural unit which can provide a negative retardation, the acrylic copolymer satisfying following conditions that:

(A) the copolymer has a glass transition temperature (Tg) of 100°C or higher;
(B) a film comprising the copolymer has a total light transmittance of 85% or higher; and
(C) a retardation per 100 μm of thickness in an in-plane direction of the film is 10 nm or lower, and a difference between a retardation per 100 μm of thickness in an in-plane direction of the film after the film is drawn by 1.5 times and a retardation per 100 μm of thickness in an in-plane direction of the film before the film is drawn is 20 nm or lower.

**2.** The acrylic copolymer according to claim 1, wherein the lactone ring structure is represented by following formula (1):

[Chemical Formula 1]

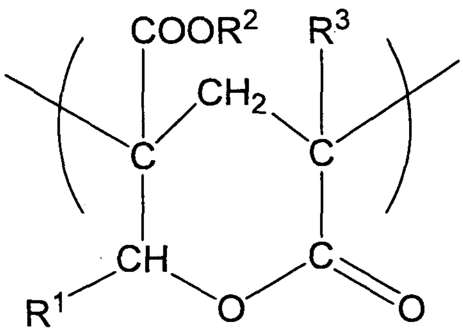

(1)

wherein $R^1$, $R^2$, and $R^3$ each independently represent a hydrogen atom or an organic residue having from 1 to 20 carbon atoms; and the organic residue may contain one or more oxygen atoms.

**3.** The acrylic copolymer according to claim 1 or 2, wherein the structural unit which can provide a negative retardation is an aromatic vinyl unit represented by following formula (2):

[Chemical Formula 2]

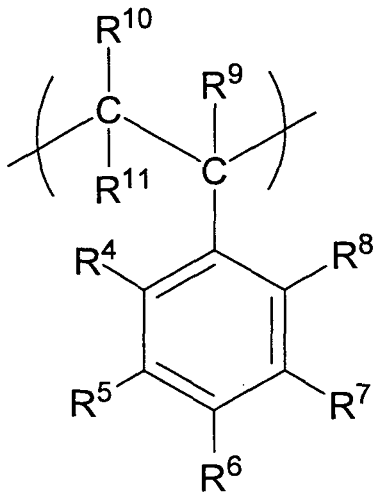

(2)

wherein $R^4$, $R^5$, $R^6$, $R^7$, $R^8$, $R^9$, $R^{10}$, and $R^{11}$ each independently represent a hydrogen atom, a halogen atom, and an organic residue having from 1 to 20 carbon atoms; and the organic residue may contain one or more oxygen atoms.

**4.** The acrylic copolymer according to any one of claims 1 to 3, further comprising a structural unit derived from a (meth)acrylic acid alkyl ester wherein the alkyl group has from 1 to 7 carbon atoms.

**5.** The acrylic copolymer according to any one of claims 1 to 4, wherein a yellowing index (YI), at an optical path length of 1 cm, of a 15% chloroform solution of the copolymer after the copolymer is heated at 280°C under an atmosphere of air for 60 minutes is 20 or lower.

**6.** An acrylic copolymer comprising a structural unit which can provide a positive retardation and a structural unit which can provide a negative retardation derived from an aromatic monomer, the acrylic copolymer satisfying following conditions that:

(A) the copolymer has a glass transition temperature (Tg) of 100°C or higher;
(B) a film comprising the copolymer has a total light transmittance of 85% or higher;
(D) retardations per 100 μm of thickness in an in-plane direction of the film and in a thickness direction of the film are 10 nm or lower; and
(E) the copolymer contains no nitrogen atom, and a yellowing index (YI), at an optical path length of 1 cm, of a 15% chloroform solution of the copolymer is lower than 3.

**7.** An acrylic copolymer comprising a structural unit which can provide a positive retardation and a structural unit which can provide a negative retardation derived from an aromatic monomer, the acrylic copolymer satisfying following conditions that:

(A) the copolymer has a glass transition temperature (Tg) of 100°C or higher;
(B) a film comprising the copolymer has a total light transmittance of 85% or higher;
(D) retardations per 100 μm of thickness in an in-plane direction of the film and in a thickness direction of the film are 10 nm or lower; and
(F) when the film is bent under an atmosphere of 25°C and 65% RH air to a radius of 1 mm at 180 degrees after being drawn, no crack is formed.

**8.** The acrylic copolymer according to claim 6 or 7, wherein the structural unit which can provide a positive retardation has a lactone ring structure represented by following formula (1):

[Chemical Formula 3]

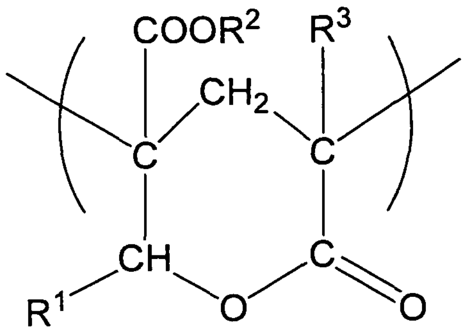

(1)

wherein $R^1$, $R^2$, and $R^3$ each independently represent a hydrogen atom or an organic residue having from 1 to 20 carbon atoms; and the organic residue may contain one or more oxygen atoms.

**9.** The acrylic copolymer according to any one of claims 1 to 8, wherein a number of foreign particles having an average particle diameter of 20 μm or greater, which are contained in 1 g of the copolymer, is 50 or smaller.

**10.** A film comprising the acrylic copolymer according to any one of claims 1 to 9.

## INTERNATIONAL SEARCH REPORT

International application No.
PCT/JP2006/315291

A. CLASSIFICATION OF SUBJECT MATTER
*C08F220/28*(2006.01)i, *C08F8/48*(2006.01)i, *C08F212/06*(2006.01)i

According to International Patent Classification (IPC) or to both national classification and IPC

B. FIELDS SEARCHED

Minimum documentation searched (classification system followed by classification symbols)
C08F220/28, C08F8/48, C08F212/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| P,A | JP 2006-171464 A (Nippon Shokubai Co., Ltd.), 29 June, 2006 (29.06.06), Full text (Family: none) | 1-10 |
| A | JP 2004-168882 A (Toray Industries, Inc.), 17 June, 2004 (17.06.04), Full text (Family: none) | 1-10 |
| A | JP 09-241323 A (Mitsubishi Rayon Co., Ltd.), 16 September, 1997 (16.09.97), Full text (Family: none) | 1-10 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 October, 2006 (10.10.06) | Date of mailing of the international search report<br>24 October, 2006 (24.10.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/315291

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2003-313237 A (Toray Industries, Inc.),<br>06 November, 2003 (06.11.03),<br>Claims; examples<br>(Family: none) | 6,7,10<br>1-5,8,9 |
| X<br>A | JP 05-086252 A (Nippon Shokubai Co., Ltd.),<br>06 April, 1993 (06.04.93),<br>Claims; Par. No. [0012]; examples<br>(Family: none) | 7,10<br>1-6,8,9 |
| X<br>A | JP 03-244608 A (Hitachi Chemical Co., Ltd.),<br>31 October, 1991 (31.10.91),<br>Claims; examples<br>(Family: none) | 7,10<br>1-6,8,9 |
| X<br>A | JP 63-199710 A (Nippon Shokubai Kagaku Kogyo Co., Ltd.),<br>18 August, 1988 (18.08.88),<br>Claims; examples<br>(Family: none) | 7,10<br>1-6,8,9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000230016 A
- JP 2000302815 A
- JP 61254608 A
- JP 61261303 A